# EUROPEAN PATENT APPLICATION

(11) **EP 1 160 673 A1**
(43) Date of publication of application: **05.12.2001**
(21) Application number: 00974965.6
(22) Date of filing: 13.11.2000
(51) Int. Cl.: G06F 13/00, H04Q 7/38

(54) **COMMUNICATION CONTROL DEVICE, HOST DEVICE AND METHOD OF COMMUNICATION**

(30) Priority: 12.11.1999 JP 32344799
(71) Applicant: Sony Corporation, Tokyo 141-0001 (JP)
(72) Inventor: KAWAMURA, Hirofumi Sony Corporation, Tokyo 141-0001 (JP)
(74) Representative: Ayers, Martyn Lewis Stanley
(86) International application number: JP0007998
(87) International publication number: WO0135230

(57) **Abstract**

A wireless communication apparatus (3) and host equipment (4) are mounted, and data are given and received from a public communication network (40) through a short-distance wireless communication network (30). The wireless communication apparatus (3) has a protocol stack (12) having SMTP and POP mounted thereon in order to control network setting information which is information in connection with the public communication network (40) and processing of a network server in the public communication network (40). The wireless communication apparatus (3) operates so as to set a connection relationship with the public communication network (40) through the short-distance wireless communication network (30) on the basis of network setting information to control transmit-receive of dat between the network server and the host equipment (4) in accordance with SMTP and POP. Even when a plurality of host equipment are handled as described, a burden on a user with respect to network setting or the like when a network application is used is lightened.

## Description

### Technical Field

The present invention relates to a communication control apparatus and a communication method which are suitable for use with a short-distance wireless communication network comprising at least a communication control apparatus and host equipment, and in more detail, relates to a communication control apparatus, host equipment thereof, and a communication method for carrying out transmit-receiving of data between the host equipment and the network server through the short-distance wireless communication network.

### Background Art

Recently, development has been carried out, in the wireless LAN (Local Area Network) system, about the system which employs a Bluetooth system which uses an electric wave of 2.4 GHz. band to effect processing in conformity of a frequency hopping system to carry out transmit-receiving of data between pieces of equipment.

The above-described Bluetooth system has been developed jointly by enterprisers in various business fields of computers, electric communications, networking, and so on using the wireless communication technology, and is the system for realizing the ad hoc wireless (RF) networking between a plurality of personal computers and devices. The Bluetooth system has been planned by eiterprisers such as Inter, Erikson, IBM, Nokia, and Toshiba (registered trademark) who have participated in Bluetooth SIG (Special Interest Group). According to the Bluetooth system, a notebook, a PDA (Personal Digital Assistant) or a portable telephone co-owns information and various services with a personal computer through wireless communication, not requiring troublesome cable connection.

The Bluetooth system is designed for ad hoc short-distance connection, and the communicable range is within 10 m as a standard. In the Bluetooth system, the ad hoc multipoint connection is carried out to construct "Piconet" whose maximum number of connections is eight (8) and communication range is 10 m, co-owning the band width of 1 Mbps. In the Bluetooth system, when synchronous communication is carried out, the transfer speed of 432.6 Kbps is realized for both up communication and down communication, capable of realizing the speed about ten times of normal analog connection according to 56K MODEM. On the other hand, in the Bluetooth system, communication at higher speed is enabled in non-synchronous communication, and the speed of down communication is 721 Kbps and that of up communication is 57.6 Kbps. Further, in the Bluetooth system, the voice communication is supported also, and three synchronous voice channels (transfer speed: 64 Kbps) at maximum can be set simultaneously. Further, the simultaneous transfer of voice and data can be realized by a single channel which provides 64 Kbps synchronous voice link and non-synchronous data link. Such a Bluetooth system can be utilized in a variety of platforms, and in addition, the wireless communication can be realized at low cost.

According to the Bluetooth system as described above, an intelligent mechanism owned by a PC base software can be realized by every electronic equipment. However, for putting the Bluetooth system to practical use, it is necessary to make a transceiver component smaller in size and lower in price, and to be able to incorporate the system into today's note-type personal computers, PDA, portable telephones, and portable head sets, etc. Further, since portable type equipment normally uses a battery, it is necessary to save the power consumption.

For solving the problems noted above, the Bluetooth system employs a system for designing all logics and transceiver hardware compactly. The transceiver hardware uses radio frequency having a 2.4 GHz band that can be used without permission, and further employs a spread system by way of frequency hopping in order to prevent wiretapping and interference. This frequency hopping carries out hopping 1600 times every second on 79 channels (2.402 GHz to 2.480 GHz) divided every 1 MHz. Further, the Bluetooth system enciphers data, and limits a device capable of getting access by password authentication, in order to enhance the security of data transmission.

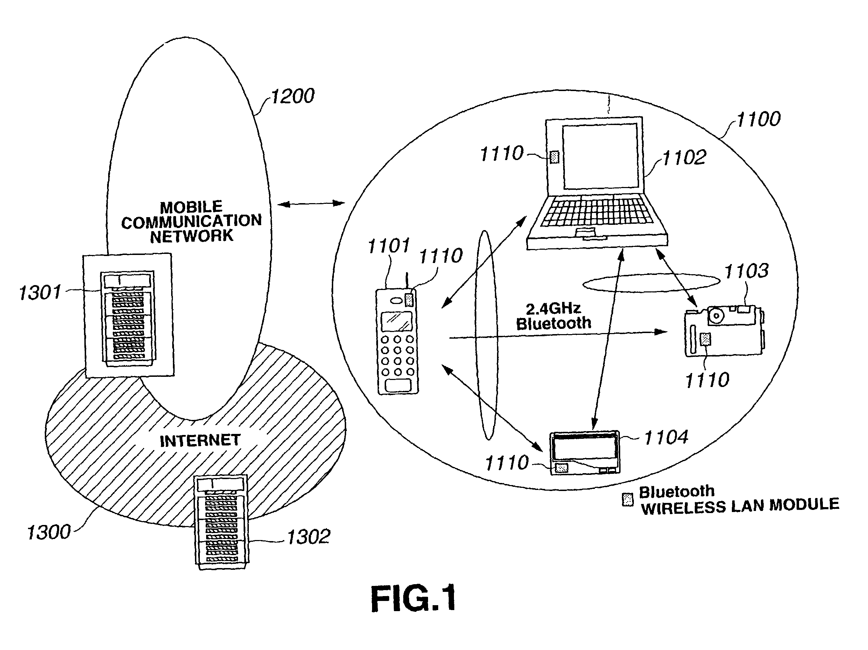

In a wireless LAN system 1100 which employs the Bluetooth system as described, as shown in FIG. 1, a portable telephone 1101, a personal computer 1102, a digital camera 1103, and a portable information terminal 1104 are respectively loaded with a wireless LAN module 1110 of the Bluetooth system. With this, the portable telephone 1101, the personal computer 1102, the digital camera 1103, and the portable information terminal 1104 which constitute the wireless LAN system 1100 use the wireless LAN module 1110 loaded on each equipment to carry out transmit-receiving of data to thereby enable carrying out transmit-receiving of data therebetween.

Further, connection is made from the portable telephone 1101 of the wireless LAN system 1100 to an Internet network 1300 through a mobile communication network 1200 by dial-up connection, connection is made to an Internet service provider 1301 internally of the Internet network 1300 through the wireless LAN system 1100 and the mobile communication network 1200 by the personal computer 1102, the digital camera 1103, and the portable information terminal 1104 to connect to a WWW (World Wide Web) server 1302 internally of the Internet network 1300.

As described above, according to the wireless LAN system 1100, the personal computer 1102, the digital camera 1103, and the portable information terminal 1104 enable connection with the Internet network 1300 by wireless connection without connection with the portable telephone 1101 by wire. Accordingly, according to the wireless LAN system 1100, it is possible to enhance the portability of the personal computer 1102, the digital camera 1103, and the portable information terminal 1104. Further, according to the wireless LAN system 1100 as described, the connection to the Internet network 1300 becomes enabled carrying only the terminal such as the portable information terminal 1104 in the state that the portable telephone 1101 is put in a bag or the like.

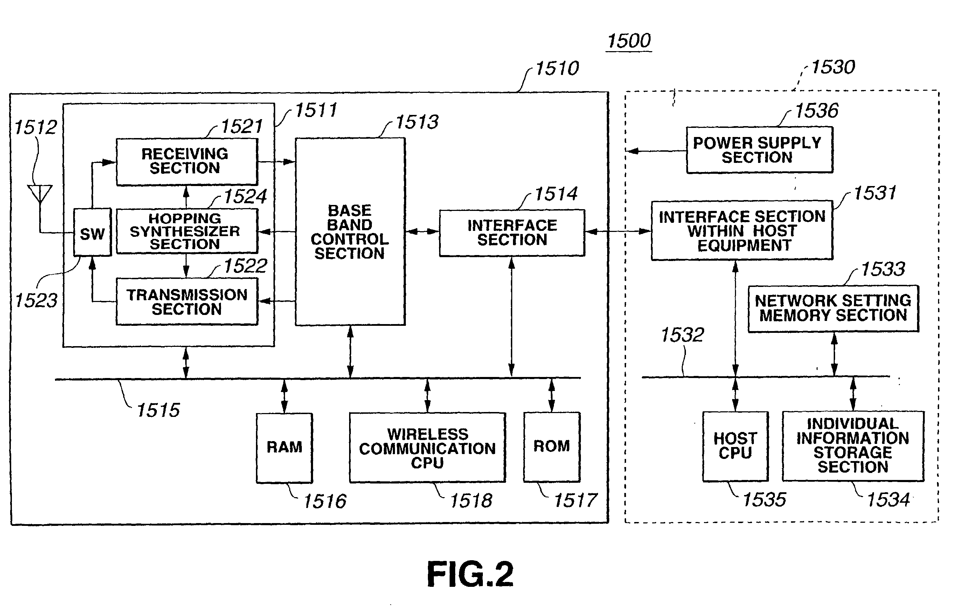

Next, the constitution of host equipment 1500 constituting the wireless LAN system 1100 will be described with reference to FIG. 2. The host equipment 1500 corresponds to equipment operated by an user of the personal computer 1102, the digital camera 1103, or the portable information terminal 1104 shown in FIG. 1 described above.

The host equipment 1500 comprises a communication control section 1510 corresponding to the wireless LAN module 1110, which controls communication with the outside, and a host control section 1530 for controlling the equipment itself.

The communication control section 1510 comprises a wireless communication section 1511 for controlling wireless communication within the wireless LAN system 1100, an antenna section 1512 for transmit-receiving data with various parts constituting the wireless LAN system 1100, a base band control section 1513 for giving a hopping frequency pattern to the wireless communication section 1511, and an interface section 1514 for inputting and outputting data with a host control section 1530.

The base band control section 1513 carries out modulation-demodulation processing of the frequency hopping, processing for converting data carried out in the communication control section 1510 into a predetermined format to transmit it through the communication control section 1510, and data conversion for converting data received in the predetermined format to output it to the host control section 1530.

The wireless communication section 1511 comprises a receiving section 1521 for carrying out processing for receiving data from the antenna section 1512, a transmission section 1522 for carrying out processing for transmitting data from the antenna section 1512, a switching section 1523 for switching between the transmission of data from the transmission section 1522 through the antenna section 1512, and outputting of data from the antenna section 1512 to the receiving section 1521, and a hopping synthesizer section 1524 for carrying out spread spectrum by the frequency hopping with respect to data in the receiving section 1521 and the transmission section 1522.

The communication control section 1510 further comprises RAM (Random Access Memory) 1516 connected to a data bus 1515, ROM (Read Only Memory) 1517, and CPU (Central Processing Unit) 1518.

The CPU 1518 reads control programs for controlling various parts constituting the communication control section 1510 through the data bus 1515 from the ROM 1517 to produce a control signal. At that time, the CPU 1518 stores data as occasion calls with the RAM 1516 as a work area to execute a control program. Thereby, the CPU 1518 controls the base band control section 1513 and the wireless communication section 1511 to control communication with other pieces of equipment constituting the wireless LAN system 1100, and controls the host control section 1530 through the interface 1514.

The host control section 1530 in the host equipment 1500 comprises an interface section 1531 for inputting and outputting a signal with the interface section 1514 of the communication control section 1510, and in the host equipment 1500, connected to a data bus 1532 are a network setting memory section 1533 for storing network setting information such as a server address of an Internet service provider 1301 when the Internet is connected, an individual information memory section 1534 for storing individual information such as a mail address, a password and so on every user holing each host equipment 1500, and CPU 1535 for controlling the respective sections. The host control section 1530 comprises a power supply section 1536 for supplying power to the communication control section 1510.

In the host equipment 1500 as described, for carrying out the connection with the Internet network 1300, first, network setting information stored in the network setting memory section 1533 and individual information stored in the individual information memory section 1534 are output to the communication control section 1510, next, the wireless communication section 1511 and the base band control section 1513 are controlled, and the connection setting with the Internet network 1300 is carried out by the CPU 1518 of the communication control section 1510 using the network setting information and individual information to thereby establish the connection between the host equipment 1500 and the WWW server 1302.

For adding the wireless LAN function of the Bluetooth system, there are contemplated two techniques. The first technique is the built-in type in which the wireless LAN function is built-in the equipment, and the second technique is the type in which the wireless LAN function of the Bluetooth system is stored in a PCMCIA (Personal Computer Memory Card International Association) card and connected to other equipment.

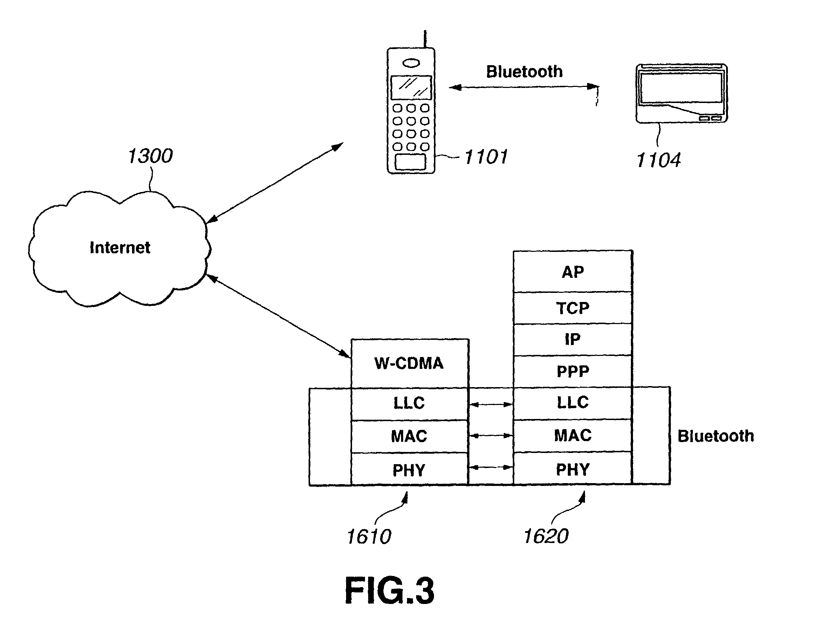

FIG. 3 shows protocol stacks 1610 and 1620 mounted on the portable telephone 1101 and the portable information terminal 1104 when connected to the Internet network 1300 by the wireless LAN system 1100 provided with the wireless LAN function by the built-in type which is the first technique described above.

The protocol stack 1610 and the protocol stack 1620 have a physical layer (PHY), a media access control layer (MAC), and a logic link control layer (LLC), for realizing the wireless LAN system 1100 of the Bluetooth system, as lower three layers. The portable telephone 1101 and the portable information terminal 1104 use the protocols of the lower three layers, to transmit and receive data within the wireless LAN system 1100.

On the layer above LLC of the protocol stack 1620 is mounted PPP (Point to Point Protocol), having a protocol necessary when dial-up connecting to the Internet network 1300. Further, on the layer above PPP are mounted IP (Internet Protocol) and TCP (Transmission Control Protocol) necessary when connecting to the Internet network 1300 to send data to an application layer (AP).

In the protocol stack 1610, a protocol for realizing the Bluetooth system with respect to the lower three layers is mounted, similar to the above-described protocol stack 1620, and a layer with respect to the portable telephone such as W-CDMA (Wide Band-Code Division Multiple Access) is mounted on the upper layer, which takes a data communication mode thereby realizing the connection to the Internet network 1300 through the mobile communication network 1200.

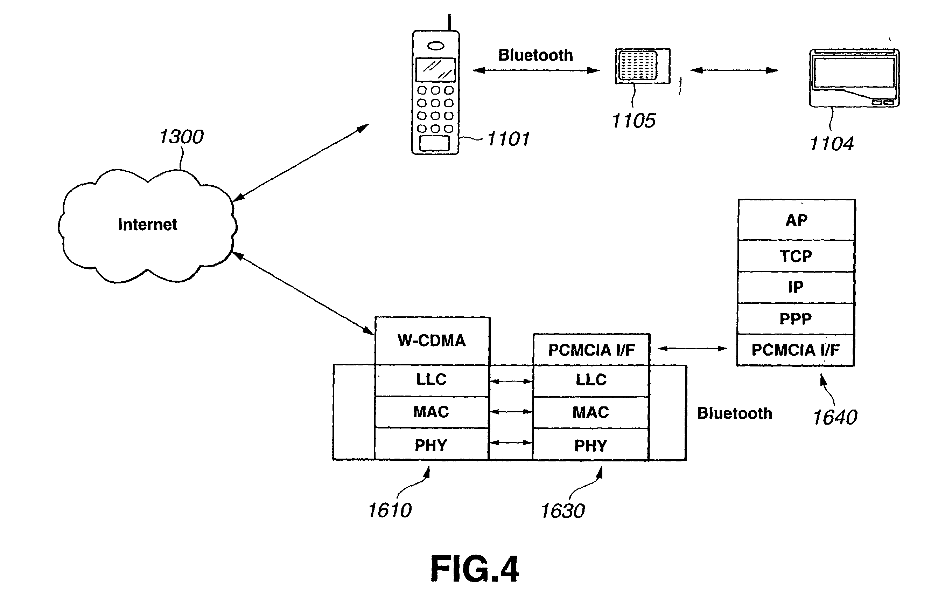

FIG. 4 shows protocol stacks 1610, 1630, and 1640 mounted on the portable telephone 1101, a PCMCIA card 1105, and the portable information terminal 1104 when the wireless-LAN system 1100 by storing the wireless LAN function in the PCMCIA card which is the above-described second technique.

The wireless LAN function for constructing the wireless LAN system 1100 of the Bluetooth system is built in the PCMCIA card 1105, and there are present the physical layer (PHY), the media access control layer (MAC), and the logic link control layer (LLC), for realizing the Bluetooth system, as lower three layers, similar to the protocol stack 1610 of the portable telephone 1101. According to the protocol stack 1630 with respect to the PCMCIA card 1105, PCMCIAI/F is mounted as an upper layer of LLC.

Further, according to the protocol stack 1640 of the portable information terminal 1104, PPP, IP, and TCP are mounted as upper layers of the PCMCIAI/F layer to carry out the transmit-receiving of data as the uppermost layer.

In the wireless LAN system 1100 as described above, host equipment used by an individual user include various pieces of equipment in addition to the personal computer 1102, the digital camera 1103, and the portable telephone 1104. These pieces of equipment include a variety of equipment such as home terminals such as a TV set, a stereo system, a set top box and so on, in addition to those described above. Even the same kind, the host equipment are sometimes used under the various environments according to the using mode of the users, for example, such as a personal computer used in their offices, and a personal computer used in their home.

Recently, there are, as the host equipment as described above, those enabling connection with the Internet network through a public telephone network such as PSTN (Public Switched Telephone Network), ISDN (Integrated Services Digital Network), etc., and a mobile communication network making use of PDC (Personal Digital Cellular), PHS (Personal Handyphone System), etc. The host equipment provides users network applications using data described in e-mail and HTML (Hypertext Markup Language) making use of SMTP (Simple Mail Transfer Protocol) and POP (Post Office Protocol).

Under present conditions, in the wireless LAN system, when a user makes use of a plurality of host equipment, the environment setting of a network application of each host equipment is independent every host equipment.

For example, in cases where a specific user owns a plurality of host equipment storing therein an e-mail application as a network application, it has been necessary to separately set, in individual host equipment, communication setting necessary for receiving an e-mail service provided by an e-mail server, application setting, a list of address information, and information related to an individual user such as transmit-receive past record.

Further, under present conditions, when a WWW application is contemplated as a network application, even in case that the WWW application service provided by the WWW server from each host equipment is utilized by the same user, information of a book mark of URL is unavoidably dispersed every host equipment.

Even in cases where in each host equipment, the same user uses the same network application, the fact that the application setting of each host equipment cannot be handled jointly between the host equipment is a great burden on the user in terms of setting and using.

### Disclosure of the Invention

The present invention has been proposed in view of the aforementioned actual circumstances. It is an object of the present invention to provide a communication control apparatus, host equipment thereof, and a communication method capable of relieving, even when a plurality of host equipment are used, a burden on a user with respect to network setting and application setting when a network application is used.

It is another object of the present invention to provide a common interface, even in cases where plural kinds of host equipment are included in a short-distance wireless communication network.

It is still another object of the present invention to relieve a burden on a user when an e-mail is transmitted through a short-distance wireless communication network from host equipment.

The communication control apparatus according to the present invention comprises: wired communication means for transmit-receiving data between mounted host equipment; short-distance wireless communication means for transmit-receiving data to and from an external communication network through a short-distance wireless communication network; memory means for storing therein network setting information which is information related to the communication network, and a network application protocol for controlling processing of a network server within the communication network; and control means for setting a connection relationship with respect to the communication network through the short-distance wireless communication network on the basis of network setting information stored in the memory means and for controlling the transmit-receiving of data between the network server and the host equipment in accordance with the network application protocols stored in the memory means.

Further, the host equipment according to the present invention on which a communication control apparatus is mounted, the communication control apparatus comprises: wired communication means for transmit-receiving data between mounted host equipment; short-distance wireless communication means for transmit-receiving data to and from an external communication network through a short-distance wireless communication network; memory means for storing therein network setting information which is information related to the communication network, and a network application protocol for controlling processing of a network server within the communication network; and control means for setting a connection relationship with respect to the communication network through the short-distance wireless communication network on the basis of network setting information stored in the memory means to control the transmit-receiving of data between the network server and the host equipment in accordance with the network application protocols stored in the memory means, wherein the control means carry out for giving the network setting information stored in the memory means to the host equipment through the wired communication means in response to request for obtaining the network setting information from the host equipment, comprising setting processing means for issuing a request of obtaining the network setting information to the communication control apparatus, obtaining the network setting information from the communication control apparatus, and applying the obtained network setting information to the network protocols.

Further, the communication method according to the present invention comprises: setting a connection relationship between a wireless communication control apparatus and a communication network through the short-distance wireless communication network using network setting information related to a communication network externally of the short-distance wireless communication network stored in the communication control apparatus mounted on host equipment; transmit-receiving data between the communication control apparatus and a network server within the communication network in accordance with network application protocols stored in the communication control apparatus and carrying out the transfer of wired data between the host equipment and the communication control apparatus, whereby transmit-receiving data between the network server and the host equipment.

The communication method according to the present invention further comprises; carrying out transmit-receiving of a packet, through a communication control apparatus for carrying out processing for connection with a communication network externally of a short-distance wireless communication network, between the communication network and host equipment. In this communication method, when the transfer of a packet is carried out between the communication control apparatus and the host equipment, the packet in the packet format used in common to other host equipment included in the short-distance wireless communication network is produced by the communication control apparatus and the host equipment to carry out the transmit-receiving of the packet.

Furthermore, the communication method according to the present invention comprises; when data included in an e-mail is prepared by host equipment, and an e-mail is transmitted to an e-mail server included in a communication network externally of a short-distance wireless communication network through a communication apparatus and a short-distance wireless communication network mounted on the host equipment, transmitting, en bloc or divisionally, data defined in RFC (Request For Comments) from the host equipment to the communication control apparatus; constructing an e-mail within a memory region in the communication control apparatus using data transmitted from the host equipment to the communication control apparatus; and transmitting data constructed in the memory region to the e-mail server in the external communication network through the short-distance wireless communication network.

### Brief Description of the Drawings

FIG. 1 is a view showing the conventional wireless LAN system.
FIG. 2 is a block diagram showing host equipment provided on the conventional wireless LAN system.
FIG. 3 is a view for explaining the wireless LAN system according to the first procedure in prior art.
FIG. 4 is a view for explaining the wireless LAN system according to the second procedure in prior art.
FIG. 5 is a view showing the network including the wireless LAN system to which the present invention is applied.
FIG. 6 is a view showing protocol stacks with respect to the constitution of the wireless LAN system to which the present invention is applied, and pieces of equipment constituting the wireless LAN system.
FIG. 7 is a view for explaining the wireless LAN system to which the present invention is applied, and the constitution of a provider connected through a public communication network.
FIG. 8 is a block diagram showing the constitution of a wireless communication apparatus and host equipment constituting the wireless LAN system to which the present invention is applied.
FIG. 9 is a view for explaining the packet to be input and output between the host equipment and the wireless communication apparatus in the wireless LAN system to which the present invention is applied.
FIG. 10 A is a view showing the packet construction of a command packet to be input and output between the host equipment and the wireless communication apparatus in the wireless LAN system to which the present invention is applied. FIG. 10 B is a view showing the packet construction of a response packet to be input and output between the host equipment and the wireless communication apparatus in the wireless LAN system to which the present invention is applied.
FIG. 11 is a flowchart showing the processing procedure when individual authentication processing takes place between the host equipment and the wireless communication apparatus in the wireless LAN system to which the present invention is applied.
FIG. 12 is a flowchart showing the processing procedure when setting of network setting information takes place between the host equipment and the wireless communication apparatus in the wireless LAN system to which the present invention is applied.
FIG. 13 is a flowchart showing the processing procedure when obtaining, setting, changing, and deleting of individual information take place between the host equipment and the wireless communication apparatus in the wireless LAN system to which the present invention is,applied.
FIG. 14 is a flowchart showing the processing procedure when connection processing of host equipment and an e-mail server, user authentication processing, and server disconnecting processing carried out between host equipment, a wireless communication apparatus, and a provider take place.
FIG. 15 is a view showing the constitution of messages provided in RFC 822 constructed within a wireless communication apparatus included in the wireless LAN system to which the present invention is applied.
FIG. 16 is a view showing the constitution of messages provided in RFC 2046/2045 constructed within a wireless communication apparatus included in the wireless LAN system to which the present invention is applied.
FIG. 17 is a flowchart showing the processing procedure when message data is prepared between host equipment and a wireless communication apparatus in the wireless LAN system to which the present invention is applied.
FIG. 18 is a flowchart showing the processing procedure when an e-mail is transmitted from host equipment to an e-mail server.
FIG. 19 is a flowchart showing the processing procedure when a mail list is received by host equipment from an e-mail server.
FIG. 20 is a flowchart showing the processing procedure when an e-mail is received by host equipment from an e-mail server.
FIG. 21 is a view showing the concrete example of a protocol stack constituted by protocols stored in ROM of the wireless communication apparatus.
FIG. 22 is a view showing the utilizing form in which supposing the mail processing terminal by a personal computer (PC) as a terminal device, PC to which a wireless communication apparatus is applied is dial-up connected to a provider through a portable telephone to make use of mail services of the provider.
FIG. 23 is a view describing an obtaining sequence of network setting information according to the system of AT command.
FIG. 24 is a flowchart showing the processing procedure of an operating example in which a mail processing terminal having succeeded the authentication processing receives network setting information from the wireless communication apparatus.
FIG. 25 is a flowchart showing the processing procedure of an operating example in which a mail processing terminal not having succeeded the authentication processing is not able to receive network setting information from the wireless communication apparatus.
FIG. 26 is a view showing the example in which network setting information is applied to protocols provided by a mail processing terminal having succeeded the authentication processing that can receive network setting information from the wireless communication apparatus.
FIG. 27 is a view showing the example in which network setting information is applied to a network application software commercially available.

### Best Mode for Carrying out the Invention

The best mode for carrying out the present invention will be described in detail hereinafter with reference to the accompanying drawings.

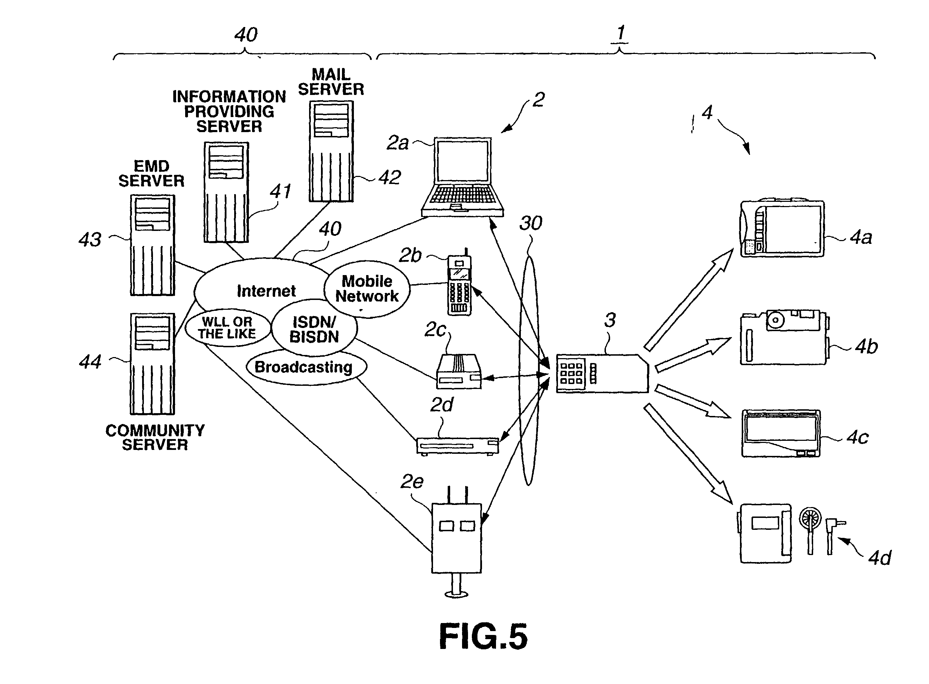

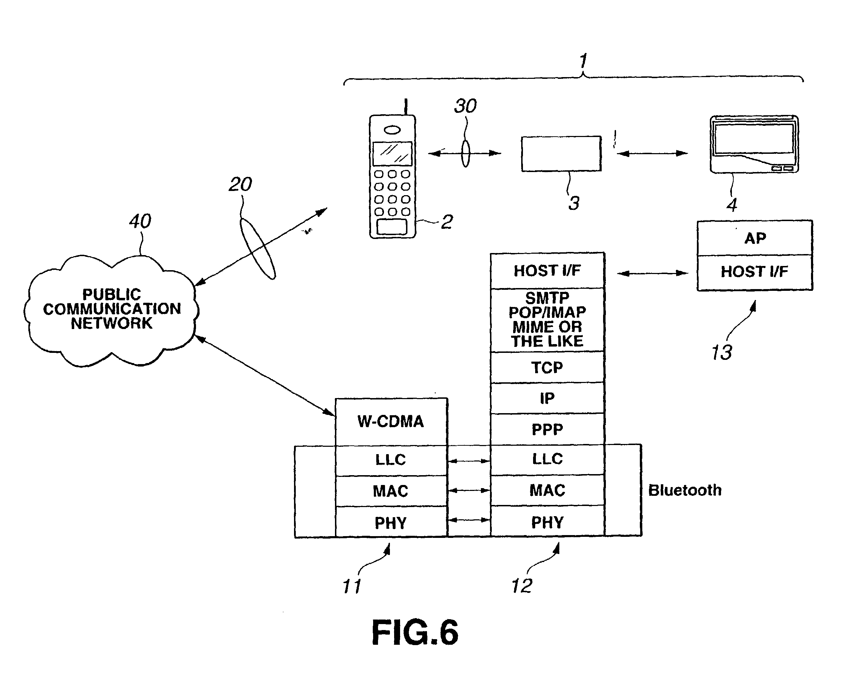

The present invention is applied to a wireless LAN (Local Area Network) system 1 constituted, for example, as shown in FIGS. 5 and 6.

As shown in FIG. 5, in the wireless LAN system 1 connected to a public communication network 40, there is employed a Bluetooth system for realizing data communication between communication equipment 2 (2a to 2e) as a gateway, a wireless communication apparatus 3, and host equipment 4 on which the wireless communication apparatus 3 is mounted.

The Bluetooth system termed herein is called as a short-distance wireless communication technique in which five Japanese and European companies started standardization activity in May 1998. The Bluetooth system constructs a short-distance wireless communication network whose maximum data transmission speed is 1Mbps (effectively, 721 Kbps) and maximum transmission distance is about 10 m to carry out data communication. In the Bluetooth system, 79 channels whose band width is 1 MHz are set in the ISM (Industrial Scientific Medical) frequency band of 2.4 GHz band that can be utilized without permission, and a spread spectrum technique of the frequency hopping system which switches channels 1600 times a second is employed to transmit-receive an electric wave between pieces of host equipment 4 (4a to 4d).

To each host equipment 4 included in the short-distance wireless communication network to the Bluetooth system is applied is applied a slave/master system, which is-divided into master equipment for deciding a frequency hopping pattern, and slave equipment of the communication other party controlled by the master equipment, according to the processing contents. The master equipment is able to carry out data communication with seven pieces of slave equipment once simultaneously. A sub-net constituted by eight pieces of equipment comprising the master equipment and the pieces of slave equipment is called "piconet". Host equipment 4 to be slave equipment in the piconet, namely, included in the wireless LAN system 1 can be slave equipment of not less than two piconets simultaneously.

The wireless LAN system 1 shown in FIG. 5 comprises pieces communication equipments 2 (2a to 2e) for carrying out transmit-receiving of data to and from a public communication network 40, for example, such as the Internet network, a wireless communication apparatus 3 for carrying out transmit-receiving of packet between other host equipment and the communication equipment 2 in the Bluetooth system through a short-distance wireless communication network 30, and pieces of host equipment 4 (4a to 4e) for carrying out input-outputting relative to the wireless communication apparatus 3.

The host equipment 4 is an electronic device mechanically connected to the wireless communication apparatus 3 and operated by a user. The host equipment 4 includes, for example, PDA (Personal Digital Assistant) 4a, a digital camera 4b, a mail processing terminal 4c, and a EMD (Electronic Music Distribution) terminal 4d.

The communication equipment 2 is a gateway connected to the wireless communication apparatus 3 through the short-distance wireless communication network 30 and connected to the public communication network 40 also, to connect the wireless communication apparatus 3 and the public communication network 40.

The communication equipment 2 includes a personal computer 2a provided with MODEM or the like connected to the public communication network 40, a portable telephone 2b employing, for example, a cdma One (Code Division Multiple Access) system or a W-CDMA (Wide Band-Code Division Multiple Access), a TA/MODEM 2c, STB (Set Top Box) 2d, and a quasi-public 2e, for example, such as a base office for connecting the wireless communication apparatus 3 and the public communication network 40 in accordance with the Bluetooth system.

The public communication network 40 includes, for example, such as the Internet network connected to the personal computer 2a through a telephone line, a mobile network connected to the portable telephone 2b, ISDN (Integrated Services Digital Network)/B (Broadband) - ISDN connected to the TA/MODEM 2c, a satellite communication network (Broadcasting) connected to STB2d, and WLL (Wireless Local Loop) connected to a quasi-public system 2d.

The Internet network included in the public communication network 40 further includes an information providing server 41, an e-mail server 42, an EMD server 43, and a community server 44.

The information providing server 42 receives a request from the host equipment 4 through the wireless communication equipment 3 and the communication equipment 2, and transmits information in response to the request to the host equipment 4. The e-mail server 42 controls an e-mail, and transmits and receives the e-mail relative to the host equipment 4 through the communication equipment 2 and the wireless communication equipment 4. Further, the EMD server 43 transmits music information to the EMD terminal 4d of the host equipment 4 through the communication equipment 2 and the wireless communication apparatus 3 to control he music providing service. The community server 44 provides, for example, street-corner information and the news information download service, for example, to the digital camera 4b of the host equipment 4, and controls upload of information from the host equipment 4.

For the sake of simplicity, in the following, a description will be made of the wireless LAN system comprising the portable telephone (communication equipment) 2 for carrying out transmit-receiving of data to and from the mobile communication network 20, the wireless communication apparatus 3 for carrying out transmit-receiving of a packet relative to the portable telephone in the Bluetooth system through the short-distance wireless communication network 30, and the host equipment 4 for carrying out input-outputting relative to the wireless communication apparatus 3, as shown in FIG. 6.

The portable telephone 2 has a function for connecting with the public communication network 40 through the mobile communication network 20. The portable telephone 2 is given with a command to the effect of being connected to the mobile commumeation network 20 and the public communication network 40 through the short-distance wireless communication network 30 from the wireless communication apparatus 3.

The host equipment 4 is, for example, such as a personal computer, a digital camera, and a portable information terminal, which are operated by a user. The host equipment 4 has a serial interface for connecting with the wireless communication apparatus 3, and the wireless communication apparatus 3 can be mechanically detachably mounted through a connector.

The protocol stack mounted on the portable telephone 2, the wireless communication apparatus 3, and the host equipment 4 constituting the wireless LAN system 1 will now be described with reference to FIG. 6.

The portable telephone 2 has a protocol stack 11 mounted thereon having lower three layers, a physical layer (PHY), a media access control layer (MAC), and a logic link control layer (LLC) for realizing the wireless LAN system 1 of the Blue tooth system. The portable telephone 2 uses the above-described lower three protocols to transmit and receive the packet through the wireless communication apparatus 3-and the short-distance wireless communication network 30.

The portable telephone 2 has a W-CDMA (Wide Band-Code Division Multiple Access) protocol mounted thereon as an upper layer with respect to the lower three layers. The portable telephone 2 has a W-CDMA (Wide Band-Code Division Multiple Access) protocol mounted thereon and forms a data communication mode by the wireless communication apparatus 3 to thereby realize the connection to the public communication network 40 through the mobile communication network 20. It is noted that the portable telephone 2 may have a protocol mounted thereon, which is different from the W-CDMA protocol described above.

The wireless communication apparatus 3 is provided with a wireless transmit-receive function and a protocol control function, carries out transmit-receiving of a packet through the portable telephone 2 and the short-distance wireless communication network 30, and carries out input-outputting of data to and from the host equipment 4.

The wireless communication apparatus 3 has a protocol stack 12 mounted thereon having lower three layers, a physical layer (PHY), a media access control layer (MAC), and a logic link control layer (LLC) similar to the aforementioned portable telephone 2. The wireless communication apparatus 3 uses the above-described lower three protocols to transmit and receive data to and from the portable telephone 2 through the short-distance wireless communication network 30. The further detailed constitution and processing contents of the wireless communication apparatus 3 will be described later.

The wireless communication apparatus 3 has upper layers, mounted thereon, PPP (Point to Point Protocol), IP (Internet Protocol), and TCP (Transmission Control Protocol) with respect to the lower three layers for constituting the short-distance wireless communication network 30.

In the wireless communication apparatus 3, an upper layer, an application layer,
with respect to TCP, has mounted thereon a network application protocol. Here, the wireless communication apparatus 3 has mounted thereon an e-mail server included in the public communication network 40 as a network application protocol and an e-mail application protocol for transmit-receiving an e-mail.

The e-mail application protocol mounted on the wireless communication apparatus 3 is a protocol for controlling processing of an e-mail server included in the public communication network 40. The e-mail application protocol has mounted thereon a mail transmission protocol for transmitting an e-mail from the wireless transmission apparatus 3 to the e-mail server, a mail receiving protocol for receiving an e-mail from the e-mail server, and a mail describing protocol defining the describing method of message data included in the e-mail.

As the above-described mail transmission protocol, SMTP (Simple Mail Transfer Protocol) can be used in which IETF (Internet Engineering Task Force) is provided in RFC (Request For Comments). Further, as the mail receiving protocol, POP 3 (Post Office Protocol Version 3) provided in RFC 1939 and IMAP 4 (Internet Message Access Protocol Version 4) provided in RFC 1730 can be used. Further, as the mail describing protocol, MIME (Multipurpose Internet Mail Extensions) for including multimedia data such as an image, a voice, and a program in an e-mail as message data provided in RFC 1521/1522 can be used.

The wireless communication apparatus 3 executes the processing in accordance with PPP to dial-up connect with, for example, an Internet service provider included in the public communication network 40, executes the processing in accordance with IP and TCP, and executes the processing in accordance with the e-mail application protocol to enable connection with the e-mail sever included in the public communication network 40.

Further, in the wireless communication apparatus 3, HTTP (Hyper Text Transfer Protocol) for transferring data described in HTML (Hyper Text Markup Language) may be mounted as the network application protocol for connecting with the WWW (World Wide Web) server. Such a wireless communication apparatus 3 as described executes the processing in accordance with HTTP to enable connection with the WWW server or the like.

Further, the wireless communication apparatus 3 has mounted thereon a HOSTI/F layer for physically connecting with the host equipment 4 as an upper layer with respect to the application layer. The HOSTI/F layer is a layer connected with the host equipment 4 to carry out input-outputting of a packet. The HOSTI/F layer is a layer for carrying out the processing carried out by the existing interface for input-outputting only, for example, USB and data stored in a flash memory. The processing carried out by the wireless communication apparatus 3 in HOSTI/F will be described later.

The host equipment 4 is provided with a protocol stack 12 comprising a HOSTI/F layer corresponding to the HOSTI/F layer mounted on the uppermost layer of the wireless communication apparatus 3 and an application (application: AP) as an upper layer with respect to the HOSTI/F layer. The host equipment 4 has the HOSTI/F layer mounted thereon to input and output data produced in the application (AP) relative to the wireless communication apparatus 3. The application layer stored in the host equipment 4 corresponds, in case of a personal computer, to an application software installed.

Further, the wireless communication apparatus 3 is mounted on the host equipment 4, whereby the input-outputting of the wireless communication apparatus and the packet is carried out by a serial interface through the HOSTI/F layer.

The processing in the wireless communication apparatus 3 and the HOSTI/F layer mounted on the host equipment 4 is a processing common to other host equipment included in the short-distance wireless communication network when processing in the application layer takes places. Namely, for example, in the processing carried out by each host equipment in the HOSTI/F layer when an e-mail application is executed, the constitution of the packet input and output in each host equipment and the wireless communication apparatus 3, and the data transfer method are unified in each host equipment. It is noted that the constitution of the packet input and output between the wireless communication apparatus 3 and the host equipment 4 will be described later.

The host equipment 4 is provided with an operation input mechanism not shown, which is operated, for example, by a user to produce an operation input signal. The host equipment 4 produces an operation input signal to the effect of connecting with the portable telephone 2 through the wireless communication apparatus 3 and the short-distance wireless communication network 30 to output a control command in accordance with the operation input signal to the wireless communication apparatus 3. Thereby, the portable telephone 2 is connected to the public communication network 40, the host equipment 4 is then connected to the public communication network 40 through a public network comprising the short-distance wireless communication network 30 and the mobile communication network 20.

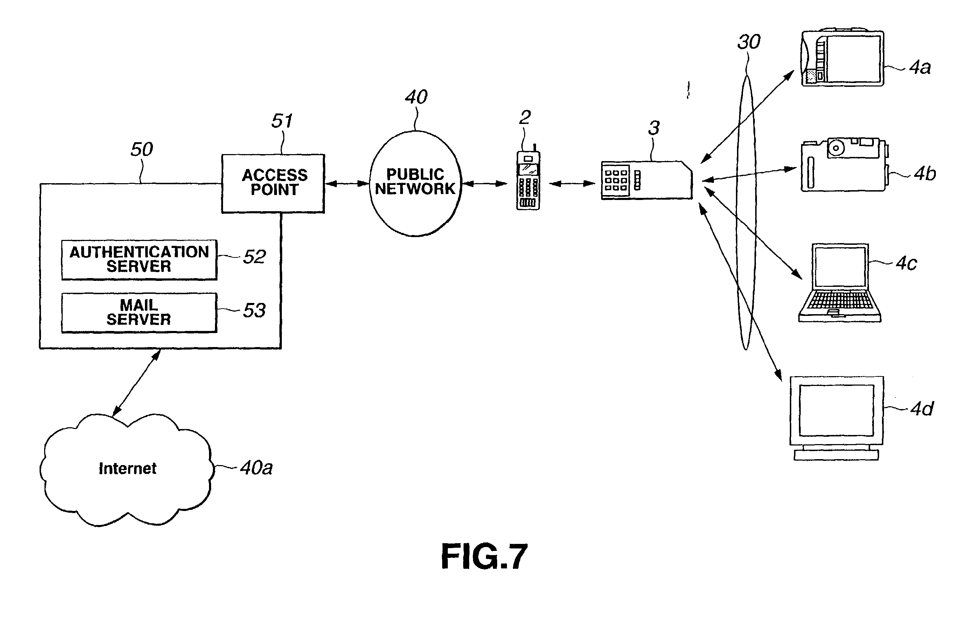

In the wireless LAN system 1 as described above, as shown in FIG. 7, the wireless communication apparatus 3 is connected to a provider 50 through the portable telephone 2, the mobile communication network 20, and the public communication network 40.

The provider 50 is a server for carrying out a connection service to an Internet network 40a and the host equipment 4. The provider 50 is provided with an access point 51 for accessing through the public communication network 40, an authentication server 52, and an e-mail server 53.

The access point 51 is a point for the PPP connection through the short-distance wireless communication network 30 and the public communication network 40 from the host equipment 4. The access point 51 interprets information included in the packet from the host equipment 4 to output it to the internal authentication server 52 or the e-mail server 53. Further, the access point 51 interprets information the internal authentication server 52 or the e-mail server 53 to produce a packet to transmit it to the host equipment 4 through the public communication network 40 and the short-distance wireless communication network 30.

The authentication server 52 carries out authentication processing when a user connects to the e-mail server 53 and other servers, in accordance with information from the access point 51. The authentication server 52 carries out user authentication processing using user ID and a user password from the access point 51, and connects in TCP/IP to permit connection with the e-mail server 53 or the Internet network 40a.

In the e-mail server 53 are stored network application protocols such as SMTP, POP 3, and IMAP 4 for transmit-receiving an e-mail. When the network application protocol is started, the e-mail server 53 carries out, relative to the wireless communication apparatus 3, network application control processing including connection and disconnection of the network application, and the transmit-receiving of an e-mail.

Further, the e-mail server 53 receives and holds an e-mail from the provider 50, and holds an e-mail from the host equipment 4 input through the access point 51. The e-mail server 53 carries out processing for transmitting an e-mail to the host equipment 4 through the access point 51, when an e-mail addressed to the host equipment 4 is present.

Further, the e-mail server 53 holds a mail list showing a list of e-mails that can be obtained by the host equipment 4 every host equipment included in the short-distance wireless communication network 30. The e-mail server 53 transmits a mail list to the wireless communication apparatus 3 in accordance with a request from the wireless communication apparatus 3 on the basis of the request for obtaining a mail list in the state that the provider 50 is connected to the host equipment 4.

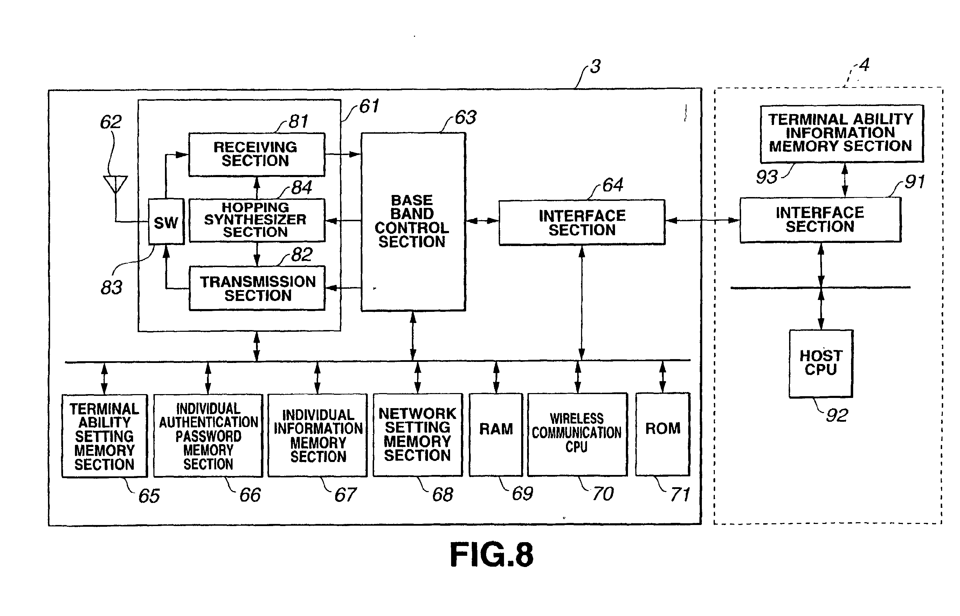

Next, FIG. 8 shows a block diagram of the wireless communication apparatus 3 and the host equipment 4 constituting the above-described wireless LAN system 1.

The wireless communication apparatus 3 comprises a communication control section 61 for carrying out wireless communication in the wireless LAN system 1, an antenna section 62 for transmit-receiving data or the like with various parts constituting the wireless LAN system 1, a base band control section 63 for controlling communication carried out in the wireless control section 51, and an interface section 64 for preparing and carrying out a packet with the host equipment 4.

The antenna section 62 comprises an antenna for outputting and detecting a signal of 2.4 GHz band (2.402 GHz to 2.480 GHZ.). The antenna section 62 transmits data from the communication control section 61 to the portable telephone 2 through the short-distance wireless communication network 30, and receives a signal through the short-distance wireless communication network 30 from the portable telephone 2 to output it to the communication control section 61.

Data in the short-distance wireless communication network 30 transmitted and received by the antenna section 62 comprises a predetermined number of bits, and a packet including data, command and response is transmitted and received at minimum unit.

The communication control section 61 comprises a receiving section 81 for carrying out processing for receiving a packet from the antenna section 62, a transmission section 82 for carrying out processing for transmitting a packet from the antenna section 62, a switching section 83 for switching between transmission of a packet from the transmission section 82 through the antenna section 62 and outputting a packet from the antenna section 62 to the receiving section 81, and a hopping synthesizer section 84 for carrying out spread spectrum by frequency hopping with respect to the packet in the receiving section 81 and the transmission section 82.

The switching section 83 operates in response to a control signal from CPU (Central Processing Unit) 60 described later, operates so as to output a packet from the antenna section 62 to the receiving section 81 when receives a packet form the antenna section 62, and operates so as to output a packet from the transmission section 82 when transmits a packet from the antenna section 62.

The receiving section 81 receives a packet from the switching section 83 to output it to the base band control section 63. A hopping frequency pattern is designated by the hopping synthesizer section 84, the receiving section 81 receives a packet in accordance with the frequency pattern when receives a packet from the switching section 83 to output it to the base band control section 63. At this time, the receiving section 81 carries out processing such as multiplication of the frequency pattern designated in packet unit by the hopping synthesizer section 84 to output it to the base band control section 63.

The transmission section 82 inputs data in packet unit produced and primarily modulated by the base band control section 63 as a packet output to the portable telephone 2 through the short-distance wireless communication network 30 from the antenna section 62 to output it to the switching section 83. A frequency pattern is designated by the hopping synthesizer 84, and the transmission section 82 outputs a packet to the switching section 83 in accordance with the frequency pattern. At this time, the transmission section 82 carries out processing for applying frequency conversion in packet unit by the frequency pattern designated by the hopping synthesizer section 84 to transmit it.

In the hopping synthesizer section 84, a hopping pattern of the frequency hopping from the base band control section 63 is designated. The hopping synthesizer section 84 outputs, when receives a packet from the antenna section 62, a frequency pattern of a hopping pattern designated by the base band control section 63 to the receiving section 81. Further, the hopping synthesizer section 84 outputs, when transmits a packet from the antenna section 62, a frequency pattern for applying frequency conversion to data from the base band control section 63 in the transmission section 82 to the transmission section 82. The hopping synthesizer section 84 is controlled by the base band control section 63 so that the same frequency pattern is designated to the receiving section 81 and the transmission section 82.

The hopping synthesizer section 84 carries out frequency conversion so as to carry out the frequency hopping 1600 times a second on 79 channels (2.402 GHZ. to 2.480 GHZ.) divided every 1 MHz.

The base band control section 63 carries out processing as described below in accordance with a control signal from wireless communication CPU 70 described later.

The base band control section 63 inputs a packet in packet unit from the receiving section 81, and carries out processing for demodulating a packet subjected to frequency modulation by the frequency hopping. Further, the base band control section 63 applies, when transmits a packet from the antenna section 62, primary modulation with respect to a packet to be transmitted to output it to the transmission section 82.

Further, the base band control section 63 controls the hopping synthesizer section 84 by applying a hopping pattern to the hopping synthesizer section 84. Thereby, the base band control section 63 controls transmission timing of a packet transmitted from the wireless communication apparatus 3, and controls receiving timing of a packet received. The base band control section 63 imparts a frequency pattern, for example, f (k), f (k+1), f (k+2), ..., as a hopping pattern, to the hopping synthesizer section 84 every predetermined time.

Furthermore, the base band control section 63 converts a packet into a predetermined packet format to output it to the transmission section 82 in packet unit, and carries out processing for decomposing the packet in the predetermined packet format from the receiving section 81 to output it to the wireless communication CPU 70 through the interface section 64 or the data bus.

The interface section 64 operates in accordance with a control signal from the wireless communication CPU 70 to prepare and decompose the packet input and output relative to the host equipment 4. The interface section 64 inputs the packet received from the antenna section 62 through the communication control section 61 and the base band control section 63; and applies predetermined conversion processing with respect to the packet to apply it to the host equipment 4. Further, the interface section 64 outputs, when transmits a packet from the antenna section 62, the packet input through the host equipment 4 to the base band control section 63.

The interface section 64 is a serial interface having a way, for example, similar to a memory stick (registered trademark). The interface section 64 is provided with a plurality of terminals in which are input and output a bus state, data, clock and so on showing a state of a serial bus when connected to the host equipment 4.

More concretely, the interface section 64 may be of the same shape and specification as that of the existing memory card which employs, for example, a serial protocol as an interface in which a flash memory is built. Namely, the interface section 64 carries out the input-outputting of data using only 3 pins of the data, clock and bus state out of 10 pins relative between the host equipment 4. The clock and the bus state are supplied from the host equipment 4, and data carries out bilateral half double transfer. When as data, the packet is transmit-received between the interface section 64 and the host equipment 4, transfer is carried out, for example, with 20 MHz as the maximum frequency of the clock and with an error check code in which 512 byte unit is fundamental added.

Further, in cases where for example, a flash memory is provided, a memory controller is disposed between the flash memory and the interface section 64. The memory controller carries out in accordance with the protocol of the serial interface to control contents of the flash memory. In cases where for example, the flash memory comprises a plurality of flash memories, the memory controller controls contents of each flash memory. Further, in cases where the flash memory comprises a plurality of different kinds of flash memories, the memory controller absorbs a characteristic difference of various kinds of flash memories to control the flash memories, and carries out error correction processing according to the error characteristics of various flash memories. Further, the memory controller carries out processing for converting parallel data into serial data. The memory controller carries out processing in accordance with the protocol of the serial interface is able to match even a flash memory which is present at present or will appear in future. The memory controller employs FAT (File Allocation Table) loaded, for example, on a personal computer, as a system of file control of the flash memory.

Further, the memory controller stores a plurality of applications such as a stationary picture, an animation, a voice, music and so on in the flash memory to control contents of the flash memory. Here, the memory controller provides in advance a file format and directory management when data is recorded in the flash memory every application to manage data stored in the flash memory. Here, the memory controller 102 employs DCF (Design rule for Camera File system) standardized by JEIDA (Japanese Electronic Industry Development Association) as a stationary picture format, and employs ADPCM (Adaptive Differential Pulse Code Modulation) according to ITU-T (International Electric Communication Alliance) recommendation G.726 as a voice format.

Further, the wireless communication apparatus 3 has a terminal ability setting memory section 65 for storing terminal ability information indicative of terminal ability on the basis of a function of host equipment 4, an individual authentication password memory section 66 for storing individual authentication password for confirming utilizing authority of a user, an individual information memory section 67 for storing individual information that can be changed at any time by a user, and a network setting memory section 68 for storing network setting information indicative of information necessary for host equipment 4 to connect with a network such as a short-distance wireless communication network 30 and a public communication network 40 connected to the data bus.

In the terminal ability setting memory section 65 is stored terminal ability information for carrying out processing adapted to terminal ability on the basis of function of host equipment 4. In the terminal ability setting memory section 65, the same information as that of a terminal ability information memory section 93 provided on host equipment 4 is stored as terminal ability information. The terminal ability setting memory section 65 is read by wireless communication CPU 70 when processing according to the terminal ability takes place.

In the terminal ability setting memory section 65 is written terminal ability information by wireless communication CPU 70 when the wireless communication apparatus is mounted on host equipment 4. The terminal ability information includes , for example, information in connection with a letter input function or a display mechanism of host equipment 4, and information in connection with a network protocol or an application protocol mounted on host equipment 4.

In the individual authentication password memory section 66 is stored an individual authentication password in connection with utilizing authority of a user of the wireless communication apparatus 3. The individual authentication password memory section 66 stores therein, as an individual authentication password, information for permitting/preventing utilizing authority of the wireless communication apparatus 3, information for permitting/preventing accessing to an information providing server and an e-mail server contained in the public communication network 40, and information necessary for carrying out individual authentication with respect to the monetary system. In the individual authentication password memory section 66 is stored an individual authentication password of the type making use of biometrics information, for example, such as a fingerprint, and a voiceprint in addition to a text type.

In the individual information memory section 67 is stored individual information which is variably used when a network application protocol is executed by wireless communication CPU 70. Namely, in the individual information memory section 67 is stored, when an e-mail application protocol such as the SMTP, POP 3, etc. is executed as a network application protocol by wireless communication CPU 70, individual information which is variably used according to host equipment 4 which is scarce in letter input function, for example, such as a digital camera.

Concretely, in the individual information memory section 67 are stored, as individual information, address information indicative of an address for an e-mail transmission destination, address list information (an address book) indicative of a list of address information, typical sentence list information indicative of a list of typical sentence information, transmit-receive hysteresis list information indicative of hysteresis of e-mails transmitted and received, unique ID list information added to already read mails used for carrying out unread management of e-mail, access point list information indicative of a list of telephone numbers at an access point for dial-up connection, and signature information for describing a user's name and a destination to which a user is attached added to the end of message data of an e-mail prepared and transmitted.

The network setting memory section 68 stores network setting information which is used fixedly when a network application protocol is executed by wireless communication CPU 70. Namely, the network setting memory section 68 stores network setting information which is used for only information necessary when an e-mail application protocol is executed, when an e-mail application protocol such as the SMTP and POP 3 is executed as a network application protocol in wireless communication CPU 70.

The network setting memory section 68 stores, as network setting information, when the e-mail application protocol can be executed in wireless communication CPU 70, address information of an e-mail server 53 contained in a provider 50, mail user ID and a mail user password with respect to the e-mal server 53.

Further, the network setting memory section 68 stores the following three information as network setting information for functionally imparting SIM (Subscriber Identification Module). Namely, the network setting memory section 68 stores (1) a telephone number at an access point, user ID, and a user password used when the wireless communication CPU 70 executes PPP; (2) DNS (Domain Memory System) server address used when TCP/IP is executed in wireless communication CPU 70; and (3) an address of an e-mail server, mail user ID, a mail user password, and a replying mail address. The SIM functional information termed herein is information necessary for discriminating users, and information for attempting enhancement of security and subjected to encipher processing internally of the wireless communication apparatus 3.

Further, the network setting memory section 68 stores, when wireless communication CPU executes HTTP as a network application protocol to connect to WWW server, address information of a proxy server used only for HTTP as network setting information. The wireless communication CPU 70 carries out processing in accordance with HTTP using address information of the proxy server and controls so that the transmit-receiving of data between the server contained in WWW and the host equipment is carried out through the proxy server. At this time, the wireless communication CPU 70 uses URL list information indicative of a list of URL stored in the individual information memory section 67 to cause URL to be selected by host equipment 4 to control so that data described in HTML from the WWW server to the host equipment 4 is down-loaded.

Furthermore, the wireless communication apparatus 3 comprises RAM (Random Access Memory) 59 connected to the data bus, ROM (Read Only Memory) 61, and wireless communication CPU 70.

In ROM 71 are stored control programs for controlling various parts described above by wireless communication CPU 70, and the protocol stack 12 shown in FIG. 6.

The wireless communication CPU 70 reads control programs for controlling various parts constituting the wireless communication apparatus 3 through the data bus from ROM 71 to produce a control signal. The wireless communication CPU 70 stores data at any time with RAM 69 as a work area and executes control programs to produce a control signal. Thereby, the wireless communication CPU 70 controls the base band control section 63, the communication control section 61, and the interface section 64 to produce a command for controlling communication with other pieces of equipment constituting the wireless LAN system 1 and to carry out transmit-receiving of a packet to and from the host equipment 4 through the interface section 64. The details of processing contents carried out by the wireless communication CPU 70 while executing a control program, a network protocol, and a network application protocol will be described later.

The host equipment 4 comprises an interface section 91 for carrying out input-outputting of data to and from the interface section 64 of the wireless communication apparatus 3, and host CPU 92 for controlling the interface section 91 or the like through the data bus, and a terminal ability information memory section 93 in which terminal ability information in connection with a function of the host CPU 92 is stored.

The interface section 91 comprises a serial interface capable of preparing and input-outputting of a packet including data, command or response, and capable of transmit-receiving a packet in a bidiretion.

The terminal ability information memory section 93 stores terminal ability information in connection with a function of the host CPU 92, contents of which is controlled by the host CPU 92 and read. The terminal ability information stored in the terminal ability-information memory section 93 include information in connection with a display mechanism of the host equipment 4, information in connection with an operation input mechanism including letter input means such as a button and a keyboard, and information in connection with a protocol stack and an application program stored in a memory internally of the host CPU 92.

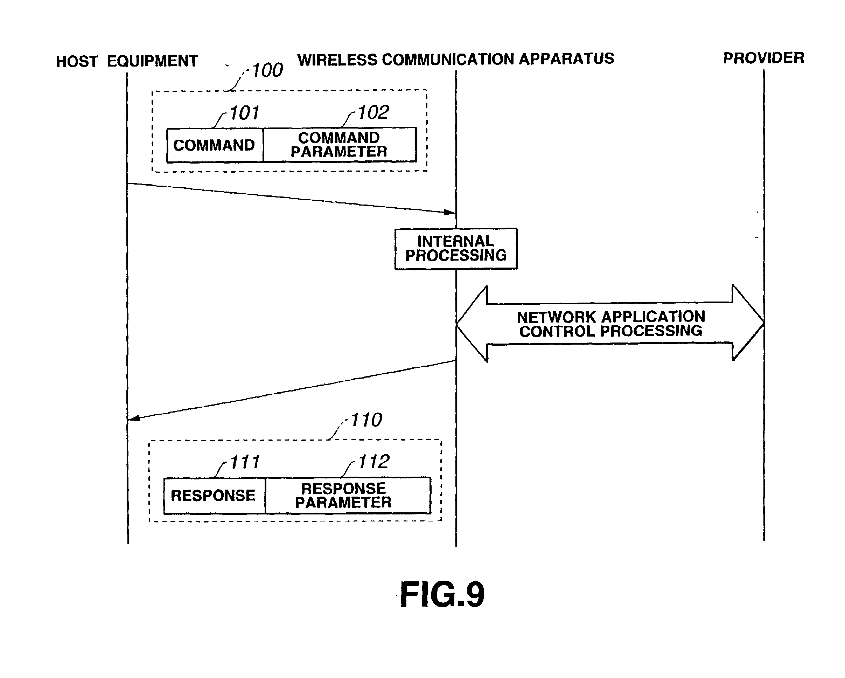

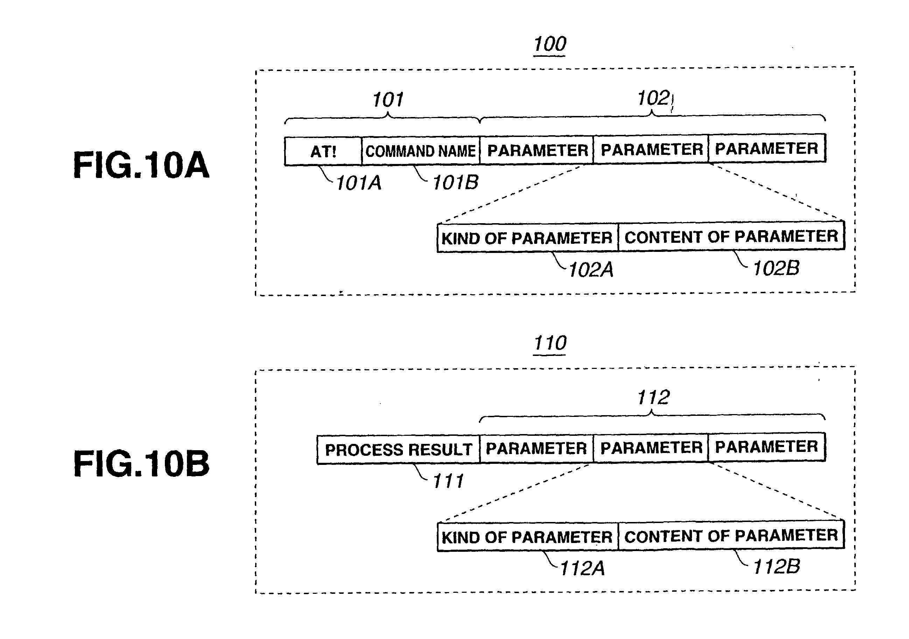

This interface section 91 comprises an interface capable of carrying out transmit-receiving of a packet to and from the interface section 64 of the wireless communication apparatus 3 as shown in FIGS. 9 and 10 A and B.

The host CPU 92 produces a packet including data produced by the host equipment 4 and a command based on the operation input signal produced by being operated by a user. This host CPU 92 executes processing in an application layer to produce data, command, and response to command. This host CPU 92 executes processing in a HOSTI/F layer to produce a packet, which is output to the wireless communication apparatus 3 through the interface section 91.

Here, the wireless communication apparatus 3 and the host equipment 4 are in a master/slave relationship, in which the host equipment 4 is a master, and the wireless communication apparatus 3 is a slave. Namely, the wireless communication apparatus 3 is operated in accordance with the packet or the like from the host CPU 92. For example, even when data is output from the wireless communication apparatus 3 to the host equipment 4, the wireless communication apparatus 3 is able to output data to the host equipment 4 only when a packet to the effect that the using right of the sel data line connecting with the host equipment 4 is obtained is input from the host CPU 92.

More concretely, when data is transmit-received between the wireless communication apparatus 3 and the host equipment 3, this is accomplished by outputting a packet of a predetermined packet format to the wireless communication CPU 70 of the wireless communication apparatus 3 in a predetermined time interval from the host equipment 4.

Namely, the host CPU 92 of the host equipment 4 produces, when data is transmitted to the wireless communication apparatus 3, a packet having control data indicative of "OUT token packet" as the PID data to output it to the wireless communication CPU 70. Further, the host CPU 92 produces, when it is able to receive data from the wireless communication apparatus 3, a packet having control data indicative of "IN token packet" as the ID data to output it to the wireless communication CPU 70. Thereby, the packet including data can be input-output between the wireless communication apparatus 3 and the host equipment 4.

Further, the host CPU 92 produces a packet in which contents of PID data is changed according to control contents of the wireless communication apparatus 3 to output it, whereby controlling an operation mode of the wireless communication apparatus. Namely, the host CPU 92 outputs the packet to the wireless communication apparatus 3 to switch the wireless communication apparatus 3 to a communication idle mode, a memory mode, an OUT transaction mode, and an IN transaction mode.

The wireless communication CPU 70 carries out initialization processing in accordance with the fact that a signal to the effect that mounted on the host equipment 4 is input from the interface section 64. The wireless communication CPU 70 carries out individual authentication processing relative to the host equipment 4 in order to confirm utilizing authority of the wireless communication apparatus 3 of a user operating the host equipment 4, and processing for inputting terminal ability information from the host equipment 4. The details of the individual authentication processing and terminal ability information will be described later.

Further, the wireless communication CPU 70 transmits, when it carries out inputting of terminal ability information, a command packet to the host equipment 4 so as to input terminal ability information from the terminal ability information memory section 93 of the host equipment 4. Then, the wireless communication CPU 70 receives a response packet corresponding to a command packet to cause the terminal ability setting memory section 65 to store terminal ability information included in the response packet.

Furthermore, the wireless communication CPU 70 carries out initialization processing, setting processing of network setting information stored in the network setting memory section 68 relative to the host equipment 4, setting processing of individual information stored in the individual information memory section 67, connection and disconnection processing relative to an e-mail server included in the public communication network 40, preparing processing for message data included in an e-mail, and transmission and obtaining processing for an e-mail. At this time, the issues a command for controlling the host equipment 4, and interprets the response to the command from the host equipment 4 to thereby carry out various processing.

In the following, the packet construction of a packet to be input-output between the wireless communication apparatus 3 and the host equipment 4 will be described with reference to FIG. 9 and FIG. 10 A, B.

When the processing as described above is carried out between the wireless communication apparatus 3 and the host equipment 4, the host equipment 4 carries out processing for producing a command packet 100, as shown in FIG. 9. On the other hand, the wireless communication apparatus 3 carries out processing for producing a response packet 110 with respect to the command packet 100. The command packet 100 and the response packet 110 are, when a plurality of pieces of host equipment are present within the short-distance wireless communication network 30, in the form of packet construction used in common between the pieces of host equipment.

For example, the wireless communication apparatus 3 is controlled by the host equipment 4 as shown in FIG. 9, the command packet 100 is output from the host equipment 4 to the wireless communication apparatus 3. The wireless communication CPU 70 of the wireless communication apparatus 3 is caused to include a result having network application control processing carried out in the response command 110 to output it to the host equipment 4.

The CPU 92 of the host equipment 4 issues a command and a command parameter 102 for controlling the wireless communication apparatus 3 included in the command packet 100. The interface section 91 of the host equipment 4 prepares the command packet 100 including the command and the command parameter issued by the host CPU 92 to output it to the wireless communication apparatus 3.

The command packet 100 comprises packet construction in which a command type 101a, a command name 101b, and a parameter 102 are arranged in order from the head, as shown in FIG. 10 A.

The command type 101a is, for example, an AT command, and stores, when the command name 101b and the parameter 102 are described, information indicative of being described in the AT command type.

In the command name 101b, commands selected by the wireless communication CPU 70 or the host CPU 92 from a command set shown in the following Table 1.

**TABLE 1**

| COMMAND NAME | OUTLINE | COMMAND PARAMETER | RESPONSE PARAMETER |
|---|---|---|---|
| SETTC | Set terminal ability information to wireless communication apparatus | ·Information item ·Item contents | None |
| AUTH | Carry out authentication operation of individual authentication password | ·Input password | None |
| SETPWD | Carry out setting of individual authentication password | ·Password before ·Changed password | None |
| SETSIM | Carry out setting of SIM information | ·SIM information item ·SIM item contents | None |
| SETNET | Set network setting information | Network information item ·Network item contents | None |
| SETPINFO | Set individual information | ·Individual information item ·Information No. Individual information contents | None |
| GETPINFO | Obtain individual information | ·Individual information item ·Information No. | ·Individual information contents |
| DELPINFO | Delete individual information | ·Individual information item ·Information No. | None |
| CNTPINFO | Count registered individual information | ·Individual information item | ·Registered number |
| CONSV | Connect with mail server | ·Server class | None |
| DISCSV | Disconnect from mail server | ·Server class | None |
| CONSTML | Construct mail data within wireless communication apparatus | ·Data class ·Data contents | ·Class of remaining data |
| SNDML | Transmit mail data | ·Data class(Date:) ·Data contents | None |
| CNTML | Obtain unread mail number | None | ·Unread mail number |
| GETMLST | Obtain a list of designated mail numbers | ·Mail number | ·Mail list data |
| GETMLST | Obtain mails of designated mail numbers | ·Mail number | ·Mail data |
| SETOPT | Set option information | ·Option item ·Option information contents | None |

The response packet 110 has construction in which a processing result 111, and a parameter 112 are arranged in that order from the head, as shown in FIG. 10 B.

The processing result 111 is a result obtained by processing a command packet 100. In a region of the processing result 111, OK or NO is described.

In parameters 102 and 112 of the command packet 100 and the response packet 110, respectively, parameter classes 102a and 112a indicative of information to be an objet of the command or the processing result, and parameter contents 102b and 112b indicative of contents of parameter classes 102a and 112a are arranged in that order. When address information of a transmission destination of mails contained in individual information is set, individual information are stored in the parameter classes 102a and 112a, an address information of an e-mail transmission destination are stored in the parameter classes 102b and 112b.

In the packets shown in FIG. 10 A and FIG. 10 B, processing of an application level not depending on the classes of the host equipment 4 is prepared by the interface section 64 of the wireless communication apparatus 3 and the interface section 91 of the host equipment 4. By the employment of such a packet constitution as described, the wireless communication apparatus 3 can be used in common between a plurality of host equipment. Thereby, in the wireless LAN system 1, communication of the command/response system can be carried out, irrespective of a kind of host equipment 4, between the host equipment 4 and the wireless communication apparatus 3, and between the host equipment 4 through the wireless communication apparatus 3.

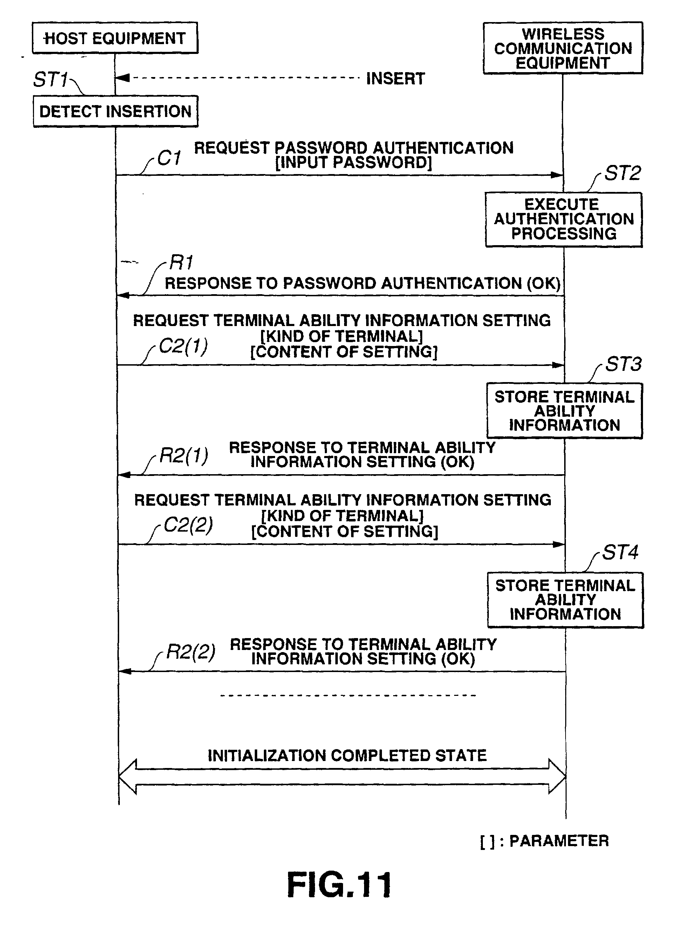

In the following, description will be made, with reference to FIG. 11, of the processing procedure of initialization processing when the wireless communication apparatus 3 is mounted on the host equipment 4, in the wireless LAN system 1 constituted as described above.

According to FIG. 11, first, in Step ST 1, in the host equipment 4, the insertion of the wireless communication apparatus is detected by the interface section 91. The interface section 91 then outputs a signal to the effect that the wireless communication apparatus is mounted to the host CPU 92. In response thereto, the host CPU 92 urges a user to input an individual authentication password indicative of utilizing authority of the wireless communication apparatus 3. The host CPU 92 carries out presentation to the effect that for example, an individual authentication password is input in a display mechanism loaded. Thereby, in response to the fact that a user, for example, uses an operation input mechanism to input an individual authentication password, the host CPU 92 issues a command of a password authentication n request (AUTH) to the effect that authentication processing of an individual authentication password is carried out, and issues a password input by the user as a command parameter. Then, the interface section 91 outputs a command packet C1 containing a command and a command parameter to the wireless communication apparatus 3.

Next, in the wireless communication apparatus 3 into which the packet command C1 is input, a command and a command parameter are input into the wireless communication CPU 70 from the interface section 64. In response thereto, the wireless communication CPU 70 interprets, in Step ST 2, the command to compare an individual authentication password stored in the command parameter with an individual authentication password stored in the individual authentication password memory section 66. Thereby, the wireless communication CPU 70 authenticates utilizing authority of the use who operates the host equipment 4, and outputs a response packet R1 having OK stored in the processing result to the host equipment 4. Thereby, the authentication processing between the wireless communication apparatus 3 and the host equipment 4 ends.

In the individual authentication password memory section 66 is stored a temporary individual authentication password at the time of production, and in cases where the user who operates the host equipment 4 is changed, it is necessary to carry out individual authentication processing using a temporary individual authentication parameter stored in advance. Thereby, a new individual authentication password is stored in the individual authentication password memory section 66. The processing for changing the individual authentication password is the same processing as that when network setting information described later is set using "SETPWD" as the command name in the above-described Table 1.

The host equipment 4 informs the wireless communication apparatus 3 of terminal ability information based on the function of the host equipment 4 after the individual authentication processing has been completed. At this time, the host CPU 92 issues a command (SETTC) to the effect that terminal ability information is set to the wireless communication apparatus 3 to make terminal ability information stored in the terminal ability information memory section 93 a command parameter. The interface section 91 then outputs a command packet C2 (1) containing a command and a command parameter 102 to the wireless communication apparatus 3.

Next, in the wireless communication apparatus 3 into which the command packet C2 (1) is input, a command and a command parameter are input into the wireless communication CPU 70 from the interface section 64. In response thereto, the wireless communication CPU 70 interprets, in Step ST 3, the command, and stores terminal ability information stored in the command parameter in a memory region corresponding to the terminal ability setting memory section 65. The wireless communication CPU 70 then outputs a response packet R2 (1) having OK stored in the processing result to the host equipment 4.

When a plurality of command parameters indicative of terminal ability are present, and it is necessary to input-output the command packet C2 and the response packet R2 plural times between the host equipment 4 and the wireless communication apparatus 3, the host equipment 4 outputs, after Step ST 4, the command packets C2 (1), C2 (2), ... sequentially to the wireless communication apparatus 3 to set terminal ability information.

Thereby, in the wireless communication apparatus 3 and the host equipment 4, the individual authentication processing and the terminal ability setting processing are ended, and the initialization processing is ended to assume an initialization processing completed state.

According to the wireless LAN system 1 for carrying out the individual authentication processing as described above, when the wireless communication apparatus 3, in which for example, information in connection with money and information in connection with individual privacy are stored as individual information and network setting information, is lost or stolen, the apparatus 3 is not allowed to be used. In cases where the individual authentication password contained in the command packet C1 is not coincided with the individual authentication password stored in the individual authentication password stored in the individual authentication password memory section 66, the wireless communication apparatus 3 rejects accessing of the individual information memory section 67 and the network setting memory section 68 to output the response packet R1 containing NG in the processing result 111 to the host equipment 4, thereby preventing use thereof by others.

Further, according to the wireless LAN system 1 for carrying out the terminal ability setting processing, processing adapted to the terminal ability of the host equipment 4 can be carried out on the wireless communication apparatus 3 side. The wireless communication apparatus 3 obtains, for example, a protocol mounted on the host equipment 4 as terminal ability information from the host equipment 4, whereby configuration of a network application protocol started internally can be carried out. Further, the wireless communication apparatus 3 is able to carry out processing such as changing of a method for obtaining an e-mail according to a kind of host equipment.

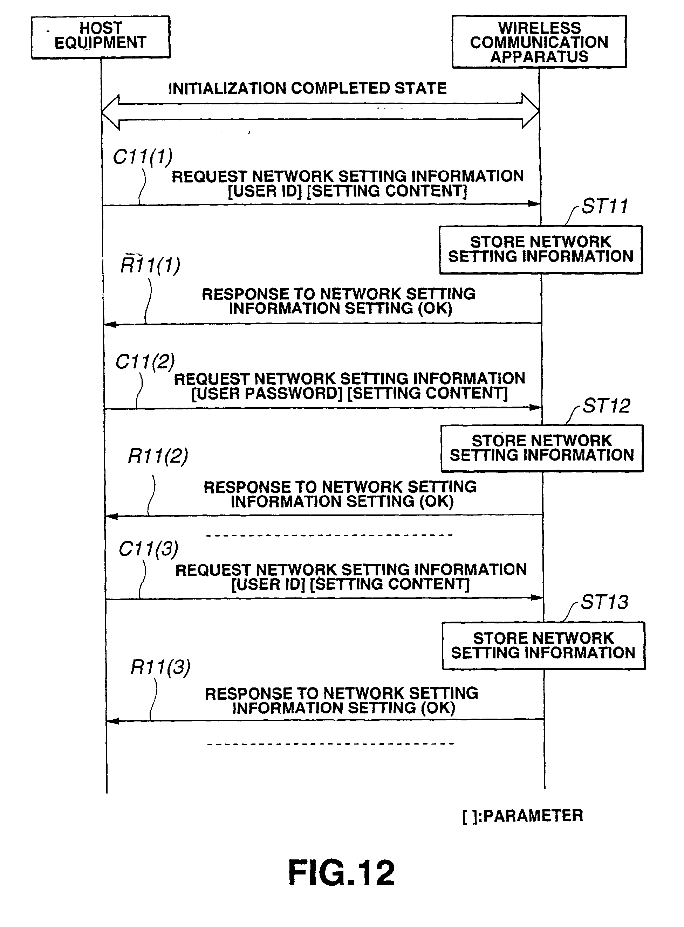

Next, description will be made, with reference to FIG. 12, of the processing procedure of processing for setting network setting information stored in the network setting memory section 68 of the wireless communication apparatus 3 in the wireless LAN system 1 constituted as described above.

Setting processing of network setting information by the host equipment 4 is carried out in the aforementioned initialization completed state. According to FIG. 12, first, the host CPU 92 of the host equipment 4 issues, with a network setting information setting request (SETNET) to the effect that setting processing for network setting information is carried out as a command, a parameter class and a parameter content to be an object as a command parameter. The interface section 91 outputs a command packet C 11 (1) containing a command and a command parameter to the wireless communication apparatus 3.

Next, in the wireless communication apparatus 3 having the command packet C 11 (1) input, a command and a command parameter (102) are input into the wireless communication CPU 70 from the interface section 64. In response thereto, the wireless communication CPU 70 interprets, in Step ST 11, a command, and stores parameter classes and parameter contents indicative of various information contained in network setting information stored in the command parameter 102 in the network setting memory section 68. The wireless communication CPU 70 outputs a response packet R 11 (1) having OK stored in the processing result 111 to the host equipment 4.

Here, when a plurality of information contained in the network setting information need be set, a plurality of command parameters are issued, and the command packet C11 and the response packet R 11 are input and output plural times between the host equipment 4 and the wireless communication apparatus 3. The wireless communication apparatus 3 carries out, in Step ST 12 and Step ST 13, setting processing for network setting information as the host equipment 4 sequentially outputs command packets C 11 (1), C 11 (2), ... to the wireless communication apparatus 3.

When network setting information is already stored in the network setting memory section 68, and besides when network setting information of the same parameter class is further input, network setting information input into the same region of the network setting memory section 68 is overwritten.

Further, information contained in the network setting information include information concerning money matters such as mail user ID, and information relating to privacy of a user. Accordingly, when processing for setting network setting information is carried out, the wireless communication CPU 70 does not store network setting information input from the host equipment 4 as text data as it is in the network setting memory section 68, but enciphers the network setting information to store it in the network setting memory section 68. Then, the wireless communication CPU 70, when uses the enciphered and stored network setting information, uses it after being decoded.

While description has been made of one example in which the network setting information is input from the host equipment 4 into the wireless communication apparatus 3 whereby the information is set to the network setting memory section 68 as described above, it is to be noted that for example, even information fixedly used with respect to the network application protocol like a telephone number of an access point used connected to an internet service provider, with respect to information which is possibly changed every time the user uses, the individual information memory section 67 may be utilized to carry out setting processing for the network setting information.

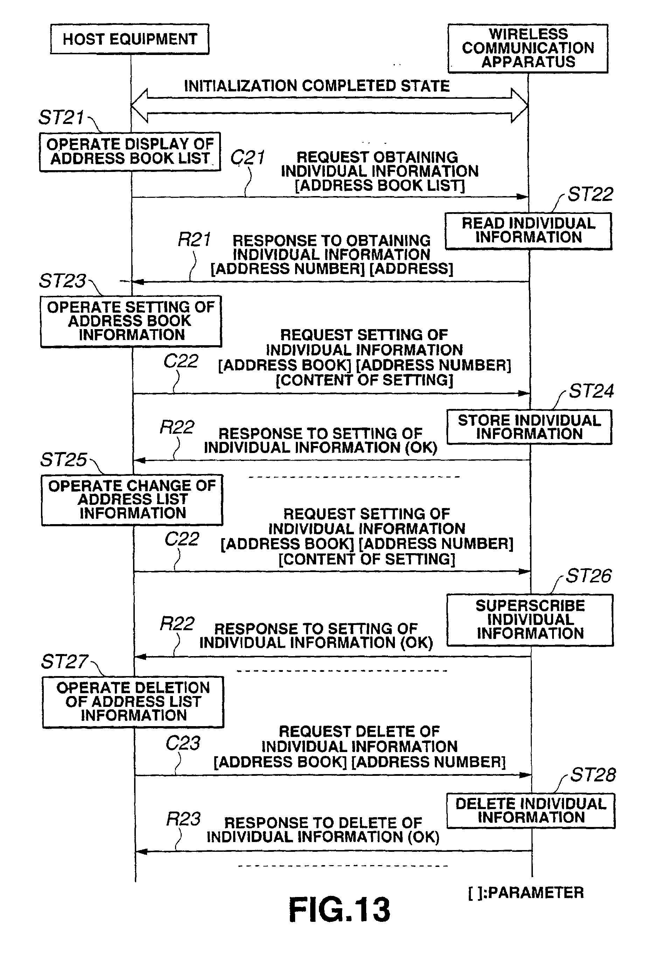

Namely, for example, information indicative of a list of telephone numbers of the access point is stored in the individual information memory section 67, and processing shown in FIG. 13 described later is carried out whereby a list of access points is displayed on the display mechanism of the host equipment 4, and a command packet containing a command parameter having telephone numbers selected by the user stored therein is input into the wireless communication apparatus 3 from the host equipment 4 to store it in the network setting memory section 68. Thereby, the setting processing for network setting information stored in the network setting memory section 68 is carried out whereby the setting inputting which is necessary to be carried out any time can be simplified.

Next, description will be made, with reference to FIG. 13, of the processing procedure of processing for obtaining, setting, and deleting individual information stored in the individual information memory section 67 relative to the wireless communication apparatus 3 from the host equipment 4, in the wireless LAN system 1 constituted as described above.

First, processing for obtaining individual information in the host equipment 4 will be described. The processing for obtaining individual information by the host equipment 4 is carried out in the above-described initialization completed state. According to FIG. 13, first, in Step ST 21, an operation input mechanism of the host equipment 4 not shown is operated by the user, and in response thereto, the host CPU 92 inputs an operation input signal to the effect that as information, for example, address list information (address book) indicative of a list of address information of equipment for transmitting an e-mail is displaced. In response thereto, the host CPU 92 issues, as a command, an individual information obtaining request (GETPINFO) to the effect that obtains individual information. The host CPU 92 issues a command parameter with address list information to be an object for the obtaining processing as a parameter class. Then, the interface section 91 outputs a command packet C21 containing a command and a command parameter to the wireless communication apparatus 3.

On the other hand, the wireless communication apparatus 3 having the command packet C21 input inputs a command and a command parameter from the interface section 64 into the wireless communication CPU 70. In response thereto, the wireless communication CPU 70 interprets, in Step ST 22, the command to read address list information shown by the parameter class stored in the command parameter from the memory region of the individual information memory section 67. The wireless communication apparatus 3 issues OK as a processing result, issues address list information as a response parameter, and outputs a response packet R21 from the interface section 64 to the host equipment 4.

Thereby, the host equipment 4 obtains address list information from the wireless communication apparatus 3, and displays a list of addresses on the display mechanism.

Next, processing for setting individual information stored in the individual information memory section 67 will be described. In the processing for setting individual information, first, in Step ST 23, when the operation input mechanism of the host equipment 4 is operated by the user, the host CPU 92 inputs an operation input signal to the effect that address list information indicative of a list of address information of equipment for transmitting an e-mail is set as individual information. In response thereto, the host CPU 92 issues a command storing therein an individual information setting request (SETPINFO) to the effect that individual information is set, and issues a command parameter with parameter contents as setting contents, with an address list to be an object for setting processing and address numbers as parameter classes. Then, the interface section 91 outputs a command packet C22 containing a command and a command parameter to the wireless communication apparatus 3.

On the other hand, the wireless communication apparatus 3 having the command packet C22 input inputs a command and a command parameter from the interface section 64 to the wireless communication CPU 70. In response thereto, the wireless communication CPU 70 interprets, in Step ST 24, the command and the command parameter, and stores in the individual information memory section 67 information indicative of parameter contents as individual information in the memory region storing therein address list information indicative of parameter classes stored in the command parameter. The wireless communication CPU 70 issues OK as a processing result, and outputs a response packet R 22 from the interface section 64 to the host equipment 4.

When a plurality of individual information to be set are present, a command packet C 5 and a response packet R 5 are input and output plural times between the host equipment 4 and the wireless communication apparatus 3.

Next, processing for changing individual information stored in the individual information memory section 67 will be described. In the processing for changing individual information, first, in Step ST 25, the operation input mechanism of the host equipment 4 is operated by the user, and in response thereto, the host CPU 92 inputs an operation input signal to the effect that address list information is changed. In response thereto, the host CPU 9 issues, as a command, an individual information setting request (SETPINFO) to the effect that individual information is set. Further, the host CPU 92 issues a command parameter with contents as parameter contents, with an address list to be an object for change processing and address numbers as parameter classes. The interface section 91 then outputs a command packet C22 containing a command and a command parameter to the wireless communication apparatus 3.

In response thereto, the wireless communication apparatus 3 having the command packet C 22 input inputs a command and a command parameter from the interface section 64 to the wireless communication CPU 70. In response thereto, the wireless communication CPU 70 interprets, in Step ST 26, the command and the command parameter 102 superscribes information indicative of setting contents as individual information on the individual information memory section 67 to achieve changing, in the memory region having address list information indicative of parameter classes stored in the command parameter. The wireless communication CPU 70 issues OK as a processing result, and outputs a response packet R 22 from the interface section 64 to the host equipment 4.

When a plurality of individual information to be changed are present, a command packet C 5 and a response packet R 22 are input and output plural times between the host equipment 4 and the wireless communication apparatus 3.

Next, processing for deleting individual information stored in the individual information memory section 67 will be described. In the processing for deleting individual information, first, in Step ST 27, the operation input mechanism of the host equipment 4 is operated by the user, and in response thereto, the host CPU 92 inputs an operation input signal to the effect that address list information is deleted. In response thereto, the host CPU 9 issues, as a command, an individual information setting request (DELPINFO) to the effect that individual information is deleted. Further, the host CPU 92 issues a command parameter with an address list to be an object for deleting processing and address numbers as parameter classes. The interface section 91 then outputs a command packet C23 containing a command and a command parameter to the wireless communication apparatus 3.

On the other hand, the wireless communication apparatus 3 having the command packet C 23 input inputs a command and a command parameter from the interface section 64 to the wireless communication CPU 70. In response thereto, the wireless communication CPU 70 interprets, in Step ST 28, the command and the command parameter deletes individual information storing therein an address list and address numbers indicative of parameter classes stored in the command parameter. The wireless communication CPU 70 issues OK as a processing result, and outputs a response packet R 23 from the interface section 64 to the host equipment 4.

When a plurality of individual information to be deleted are present, a command packet C 23 and a response packet R 23 are input and output plural times between the host equipment 4 and the wireless communication apparatus 3.

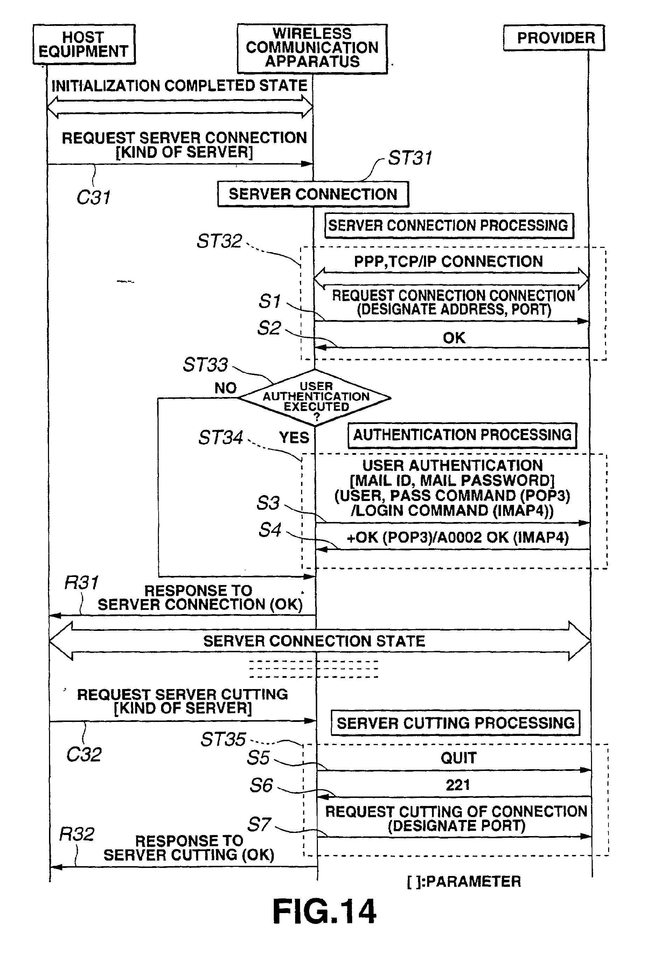

Next, processing for connecting and processing for disconnecting between the host equipment 4 and the public communication network 40 through the wireless communication apparatus 3 will be described with reference to FIG. 14. In description referring to FIG. 14, the processing procedure will be described where a network server is an e-mail server 53.

The processing for connecting the host equipment 4 and the e-mail sever 53 is carried out in the initialization completed state described above. According to FIG. 14, first, the host CPU 92 issues a command storing therein a server connection request (CONSV) to the effect that connection with the e-mail server 53 is requested, and issue a class of the e-mail server 53 as a command parameter. The class of the e-mail server 53 is a network application protocol to which various servers such as SMTP, POP, and IMAP can correspond. The interface section 91 outputs a command packet C31 containing a command to the wireless communication apparatus 3.

On the other hand, the wireless communication apparatus 3 having the command packet C31 input inputs a command from the interface section 64 to the wireless communication CPU 70. The wireless communication CPU 70 discriminates, in Step ST 31, server classes stored as command parameters. Thereby, the wireless communication CPU 70 interprets the e-mail server 53 connected with a network application protocol to which the e-mail server 53 can correspond as a discriminator.

Then, in Step ST 32, the wireless communication CPU 70 reads network setting information which is necessary according to a network application protocol stored as a command parameter from the network setting memory section 68, and starts a network application protocol stored in ROM 71. Subsequently, the wireless communication CPU 70 transmits a command packet S1 containing a connection connecting request for requesting connection with the e-mail server 53 to a provider 50 through a portable telephone 2, a mobile communication network 20, and a publica communication network 40. The wireless communication CPU 70 reads address information of the e-mail server 53 requesting connection, and information indicative of a port designated from the network setting memory section 68 to transmit them including the command packet S1. On the other hand, a response packet S2 indicative of connection enablement (OK) with the e-mail server 53 requesting connection is transmitted from the provider 50, and in response thereto, the connection is established to end the server connecting processing.

In the next Step ST 33, the wireless communication CPU 70 judges whether or not the user authentication processing is executed. At this time, the wireless communication CPU 70 judges, when the connected e-mail server 53 corresponds to POP or IMAP, that the user authentication processing is executed. The procedure proceeds to Step ST 34, and when not corresponding to POP or IMAP, the user authentication processing is not executed.

In Step ST 34, the wireless communication CPU 70 transmits, first, as user authentication processing, a mail user ID stored in the network setting memory section 62, and a command packet 3 containing a mail user password. On the other hand, authentication processing is conducted by the e-mail server 53, and a response packet S4 indicative of connection permission is received, and in response thereto, the wireless communication CPU 70 ends the user authentication processing, and the procedure proceeds to next processing.

In a case where the e-mail server 53 corresponds to POP 3 (Post Office Protocol Version 3), the wireless communication CPU 70 transmits a mail user ID and a mail user password stored in the network setting memory section 68 by USER, PASS or APOP command. On the other hand, the wireless communication CPU 70 ends the user authentication processing, in response to the authentication processing done by the authentication server 52 and the receipt of a response to a packet S4 indicative of connection permission (+OK), and the procedure proceeds to next processing.

In a case where the e-mail server 53 corresponds to IMAP 4 (Internet Message Access Protocol Version 4), authentication is conducted by the authentication server 52 by a LOGIN command. On the other hand, the wireless communication CPU 70 ends the user authentication processing, in response to the authentication processing done by the authentication server 52 and the receipt of a response to a packet S4 indicative of connection permission, and the procedure proceeds to next processing.

After assuming the state that enables access to the e-mail server 53 as a result of the user authentication processing as described above, the wireless communication CPU 70 outputs a response packet 31 relative to a command packet C31 including a server connection request to the host equipment 4.

Thereby, the host equipment 4 and the wireless communication apparatus 3 assume a server connection state to enable the transmit-receiving of data between the host equipment 4 and the e-mail sever 53 through the wireless communication apparatus 3.

Next, the server disconnecting processing for releasing the connection state between the host equipment 4 and the e-mail server 53 will be described.

First, the host CPU 92 issues a command for storing a server disconnecting request (DISCSV) to the effect the disconnection from the e-mail server 53 is requested, and issues a class of the e-mail sever 53 as a command parameter. The interface section 91 outputs a command packet C31 containing a command and a command parameter to the wireless communication apparatus 3.

On the other hand, in Step ST 35, the wireless communication CPU 70 carries out the server disconnecting processing relative to the e-mail server 53. At this time, the wireless communication CPU 70 transmits a command packet S5 containing a command (QUIT) for requesting disconnection, and receives a response packet S6 containing a response (221) for permitting it. Then, the wireless communication CPU 70 transmits a command packet S 7 indicative of a connection disconnecting request designating a port to end the server disconnecting processing. And, the wireless communication CPU 70 outputs a result of the server disconnecting processing to the host equipment 4 as a response packet R32 with respect to the command packet C32. The wireless communication CPU 70 carries out processing for ending the e-mail application protocols such as PPP, TCP, IS, and SMTP started in the above-described processing.

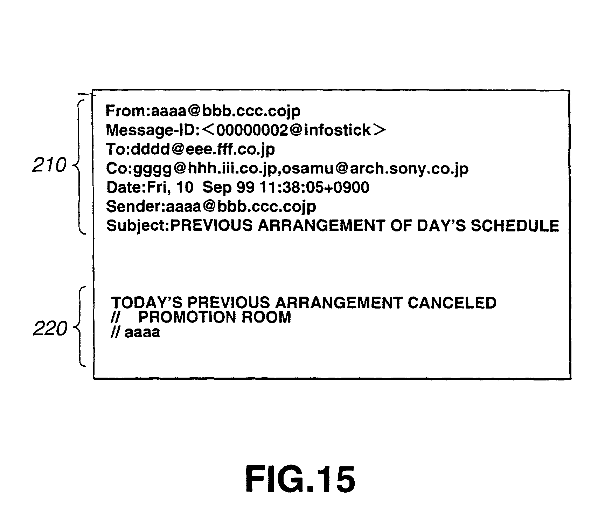

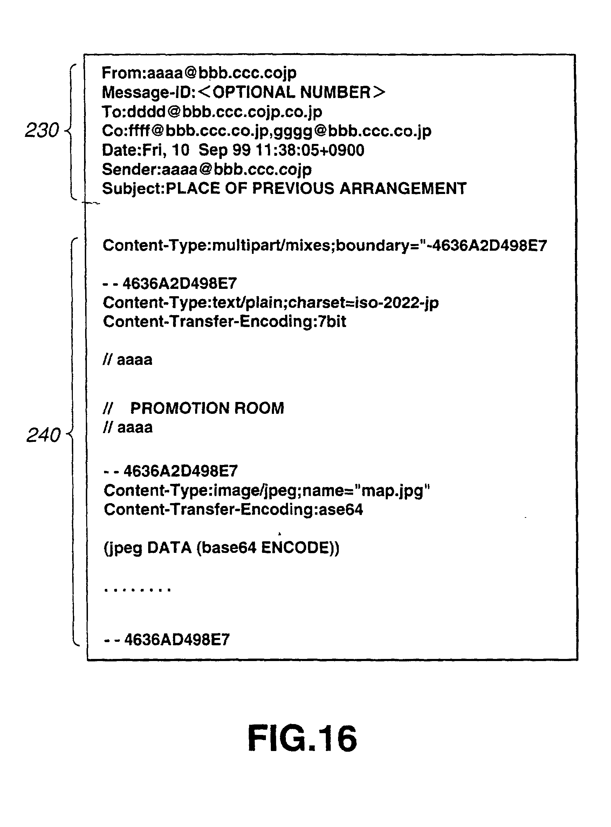

In the wireless LAN system 1, an e-mail is transmitted to the e-mail server 53 as message constitution, for example, as shown in FIGS. 15 and 16.

FIG. 15 shows an example of message constitution of an e-mail transmit-received in an Internet network provided in RFC 822. A message of this e-mail comprises a header part 210 indicative of various additional information, and a body part 220 indicative of contents of an e-mail, and the header part 210 and the body part 220 are discriminated through NULL to open a new line. The NULL to open a new-line is a predetermined blank part, which is a region that cannot be controlled by the user.

In the header part 210 are described various information added to an e-mail. In the header part 210 are described information elements every line with an information name added and a content of information name separated by [: (colon)]. The information elements include the following From line, Message-ID line, To line, Cc line, Date line, Sender line, and Subject line.

In the From line is described an address of a user representative of an e-mail transmission source. Information for describing the From line is obtained by the wireless communication CPU 70 from the network setting memory section 68 of the wireless communication apparatus 3 and is added to the body part 220.

In the Message-ID line is described an unique ID for primarily discriminating an e-mail. Information for describing the Message-ID line is decided as a suitable number by the wireless communication CPU 70 and added to the body part 220.

In the To line is described address information of an e-mail transmission destination. Information for describing the To line is added to the body part 220 by the wireless communication CPU 70 in accordance with a message data preparing request from the host equipment 4.

In the Cc line is described address information of a carbon copy. Information for describing the Cc line is added to the body part 220 by the wireless communication CPU 70 in accordance with a message data preparing request from the host equipment 4.

In the Date line is described a transmission date of an e-mail. Information for describing the Date line is added to the body part 220 in accordance with the form provided by the wireless communication CPU 70 in accordance with a message data preparing request from the host equipment 4.

In the Sender line is described an address of a user who transmitted an e-mail. Information for describing the Sender line is added to the body part 220 suitably by the wireless communication CPU 70.

In the Subject line is described a tile of an e-mail. Information for describing the Subject line is added to the body part 220 by the wireless communication CPU 70 in accordance with a message data preparing request from the host equipment 4.

In the body part 220 is described, for example, a sentence of an e-mail, and text data of the body of a mail including signature information. Information for describing the body part 220 is added to the body part 220 by the wireless communication CPU 70 in accordance with a message data preparing request from the host equipment 4.

FIG. 16 shows the other message constitution of an e-mail transmit-received by an Internet network 40a provided in RFC2046/2045. The message of an e-mail comprises a header part 230 indicative of various additional information, and a body part 240 indicative of contents of an e-mail, and the header part 230 and the body part 240 are discriminated through NULL to open a new line.

In the header part 230 is described information similar to the header part 210 provided in the RFC 822.

In the body part 240 is described information in which file data of the binary type is subjected to text conversion by the wireless communication CPU 70 by the encode system provided, according to the MIME system provided in RFC 2046/2045. In the body part 240 is described an added information name and a content of information name every line while being separated by [: (colon)].

In the content-Type line is added in cases where files, for example, such as a text, an image, and a voice are attached, and is described the effect, for example, of being text data. Continuously to the Content-Type line, there are described information indicative of the body of an e-mail added in response to a message data preparing request, signature data obtained from the individual information memory section 67 and added, a file name added in accordance with the message data preparing request, and file data added by the message data preparing request and encoded.

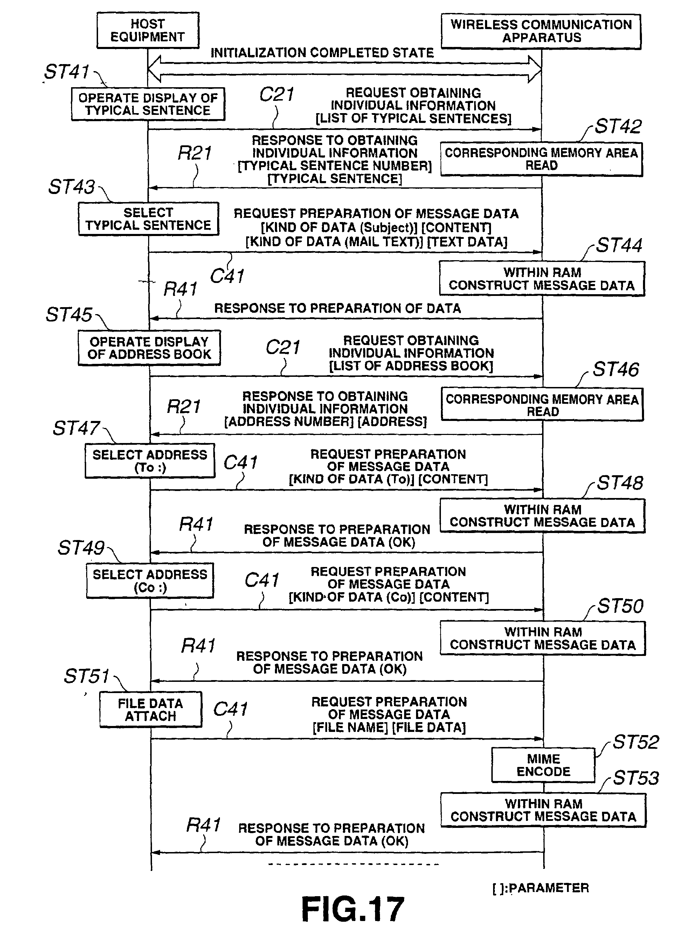

Next, description will be made of, with reference to FIG. 17, the processing procedure for the wireless communication apparatus 3 and the hot equipment 4 when the message data indicative of an e-mail described as mentioned above.

The processing for preparing message data is carried out in the above-described initialisation completed state. According to FIG. 17, first, in Step ST 41, an operation input mechanism of the host equipment 4 not shown is operated by the user, in response to which the host CPU 92 inputs an operation input signal to the effect that typical sentence list information is displayed as individual information. In response thereto, the host CPU 92 issues an individual information obtaining request to the effect that the typical sentence list information is obtained. Then, the interface section 91 prepares a command packet C21 with the typical sentence list information as a parameter class with the individual information obtaining request (GETPINFO) as a command name to output it to the wireless communication apparatus 3.

On the other hand, the wireless communication apparatus 3 having the command packet C21 input inputs a command and a command parameter from the interface section 64 to the wireless communication CPU 70. In response thereto, the wireless communication CPU 70 interprets, in Step ST 42, the command to read the typical sentence list information stored in the command parameter from a corresponding memory region of the individual information memory section 67. The wireless communication CPU 70 outputs the typical sentence list information to the interface section 64. The interface section 64 outputs a response packet R21, with OK as a processing result, with a typical sentence number as a parameter class, and with typical sentence information as a parameter content, to the host equipment 4.

Next, in Step ST 43, in the host equipment 4, an operation input command to the effect that a typical sentence is selected from a typical sentence list is input from the host CPU 92. In response thereto, the host CPU 92 issues a message data preparing request to the interface section 91. The interface section 91 prepares a command packet C41 including a command name indicative of a message data preparing request, a command parameter with data class (Subject:) as a parameter class and with a content corresponding to the parameter class as a parameter content, and a command parameter with a data class (mail body) as a parameter class and with body data corresponding to the parameter class as parameter contents to output it to the wireless communication apparatus 3.

On the other hand, the wireless communication apparatus 3 having the command packet C 41 inputs a command and a command parameter from the interface section 64 to the wireless communication CPU 70. In response thereto, the wireless communication CPU 70 interprets, in Step ST 44, the command to carry out processing for constructing message data in RAM 69. The wireless communication CPU 70 stores contents of the data class (Subject:) stored in the command parameter and the body data in a predetermined memory region of RAM 69. And, the interface section 64 outputs a response packet R41 with OK as a processing result to the host equipment 4.

In next Step ST 45, in the host equipment 4, an operation input command to the effect that address list information (address book) is displayed is input into the host CPU 92. In response thereto, the host CPU 92 issues an individual information obtaining request to the interface section 91. And, the interface section 91 prepares a command packet C 21 including a command parameter with an individual information obtaining request as a command name, and with address list information as a parameter class to output it to the wireless communication apparatus 3.

On the other hand, the wireless communication apparatus 3 having the command packet C21 input inputs a command and a command parameter from the interface section 91 to the wireless communication CPU 70. In response thereto, the wireless communication CPU 70 interprets, in Step ST 46, the command to read address list information stored in a command parameter from a corresponding memory region of the individual information memory section 67. And, the wireless communication CPU 70 outputs the address list information to the interface section 64. The interface section 64 outputs a response packet R21 with OK as a processing result, with an address number as a parameter class, and with address information as a parameter content to the host equipment 4.

Thereby, the host equipment 4 carries out displaying according to the address list information to present an address list to the user.

In next Step ST 47, in the host equipment 4, an operation input command to the effect that an address (To) is selected is input into the host CPU 92. In response thereto, the host CPU 92 issues an image data preparing request to the interface section 91. The interface section 91 prepares a command packet C 41 including a command parameter with an image data preparing request as a command name, and with a data class (To:) as a parameter class, and a content corresponding to the parameter class as a parameter content to output it to the wireless communication apparatus 3.

On the other hand, the wireless communication apparatus 3 having the command packet C41 input inputs a command and a command parameter from the interface section 64 to the wireless communication CPU 70. In response thereto, the wireless communication CPU 70 interprets, in Step ST 48, the command to carry out processing for constructing message data within RAM 69. The wireless communication CPU 70 stores contents with respect to the data class (To) stored in the command parameter in a predetermined memory region of RAM 69. The interface section 64 outputs a response packet R41 with OK as a processing result to the host equipment 4.

In next Step ST 49, in the host equipment 4, an operation input command to the effect that an address (Cc) is selected is input into the host CPU 92. In response thereto, the host CPU 92 issues an image data preparing request to the interface section 91. The interface section 91 prepares a command packet C 41 including a command parameter with an image data preparing request as a command name, and with a data class (Cc:) as a parameter class, and with a content corresponding to the parameter class as a parameter content to output it to the wireless communication apparatus 3.

On the other hand, the wireless communication apparatus 3 having the command packet C41 input inputs a command and a command parameter from the interface section 64 to the wireless communication CPU 70. The wireless communication CPU 70 carries out processing that interprets, in Step ST 50, the command to construct message data within the RAM 69. The wireless communication CPU 70 stores the contents with respect to the data class (Cc) stored in the command parameter in a predetermined memory area of the Ram 69. Then, the interface section 64 outputs a response packet R41 with OK as the processed result to the host equipment 4.

Thereby, the wireless communication CPU 70 prepares the header part including the Subject destination, the To destination, and the Cc destination.

In next Step ST 51, in the host equipment 4, an operation input command to the effect that file data is attached to message data is input into the host CPU 92. In response thereto, the host CPU 92 issues a message data preparing request to the interface section 91. Then the interface section 91prepares a command packet C41 including a command parameter with the message data preparing request with a command name, with a file name as a parameter class, and with file data corresponding to the parameter kind as parameter contents to output it to the wireless communication apparatus 3.

On the other hand, the wireless communication apparatus 3 having the command packet C41 input inputs a command and a command parameter from the interface section 64 to the wireless communication CPU 70. The wireless communication CPU 70 interprets, in Step ST 52, the command to carry out encode processing for file data in accordance with the MIME system to convert the file into, for example, text data.

In next step ST 53, the wireless communication CPU 70 stores the text data obtained by the encode processing in a predetermined memory region of RAM 69 to carry out processing for constructing message data to which text data is attached within RAM 69. The interface section 64 outputs a response packet R41 with OK as a processing result to the host equipment 4.

The host equipment 4 inputs into the wireless communication apparatus 3 a message data preparing request C41 as a command name and a single or a plurality of information elements as a command parameter. The wireless communication CPU 70 prepares message data having the information elements as shown in FIG. 15 described within RAM 69.

Concretely, the wireless communication CPU 70 carries out processing for adding information elements designated as a command parameter to the corresponding header part and the body part and obtaining and adding information for describing the From line, and the Sender line designated by a command parameter from the network setting memory section 68; and processing for adding signature information stored in the individual information memory section 67 to the end of the mail body.

Further, when the attached file is allowed to be contained in the message data, the wireless communication CPU 70 carries out processing in accordance with the MIME type for encoded text data or encoded data in response to the fact that data of the binary tope not encoded is input from the host equipment 4, to enable preparing message data containing multimedia data such as an image or a voice. Namely, the wireless communication CPU 70 carries out, as shown in FIG. 16, processing for adding information for describing Content-Type line for designating Content-Type:, boundary for clearly showing a part described in text data in the body part 240 and parts having file data of files and designating a kind of parts, and carries out processing for arranging text data and encoded file data.

It is noted that the wireless communication CPU 70 does not carry out processing for describing Date line described in the header parts 210 and 230 depending on the message data preparing request, but adds it after construction of message data other than the Date line has been completed and after the mail transmission request (SNDML) has been input.

By carrying out the aforementioned processing, the wireless communication CPU 70 prepares file data as the body part, and prepares message data comprising the header part and the body part.

According to the wireless LAN system 1 provided with the wireless communication apparatus 3 and the host equipment 4 for carrying out the processing as described above, for example, when message data of the Internet mail type is prepared, even in a case where a character input mechanism of the host equipment 4 is scarce, typical sentence information and address list information stored in the individual information memory section 67 can be used to prepare message data including text data.

Further, according to the wireless communication LAN system 1, since the encode processing in accordance with the MIME type can be carried out by the wireless communication CPU 70, for example, message data having attached file data of the binary type like an image taken by the host equipment 4 such as a digital camera can be prepared.

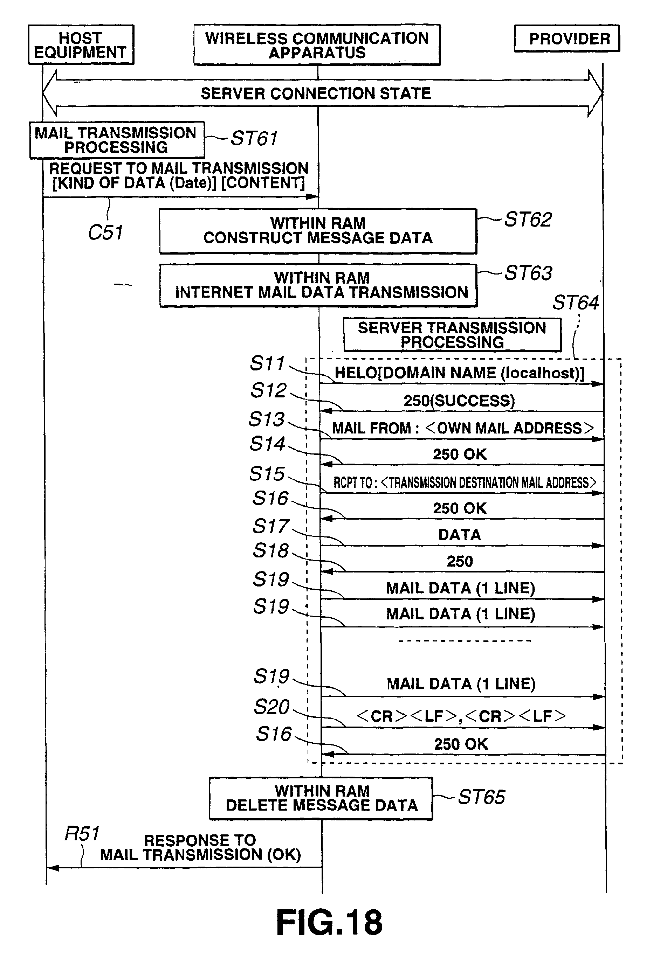

Next, description will be made of, with reference to FIG. 18, the processing procedure of the host equipment 4, the wireless communication apparatus 3, and the provider 50 when an e-mail containing the message data constructed as described above is transmitted to the e-mail server 53 of the provider 50.

Transmission of an e-mail to the e-mail server 53 of the provider 50 presupposes completion of the processing for connecting the host equipment 4 and the e-mail server 53 described above with reference to FIG. 14, and the server connection state of the host equipment 4, the wireless communication apparatus 3, and the provider 50. Further, transmission of an e-mail to the e-mail server 53 presupposes the processing described above with reference to FIG. 17, and the construction of message data within RAM 69.

According to FIG. 18, first, in Step ST 61, an operation input mechanism of the host equipment not shown is operated by the user, in response to which the host CPU 92 starts mail transmission processing to issue a mail transmission request to the effect that an e-mail is transmitted. The interface section 91 prepares a command packet C 51 with a mail transmission request (SNDML) as a command name, with a data class (Date:) as a parameter class, and with a content of data class as a parameter content to output it to the wireless communication apparatus 3.

On the other hand, the wireless communication apparatus 3 having the command packet C 61 input inputs a command and a command parameter from the interface section 64 to the wireless communication CPU 70. In response thereto, the wireless communication CPU 70 interprets, in Step ST 62, the command to carry out processing for adding Date line to message data stored in RAM 69. The host CPU 92 prepares a command packet C 41 including a command parameter with a message data preparing request as a command name, with a data class (Date) as a parameter class, and with a content corresponding to the parameter class as a parameter content to output it to the wireless communication apparatus 3 thereby constructing message data having Date line added within RAM 69.

In next Step ST 63, the wireless communication CPU 70 uses the message data stored in the RAM 69 to carry out processing in accordance with SMTP thereby preparing Internet mail data in which message data such as predetermined header information is added and indicating an e-mail. And, the wireless communication apparatus 3 transmits an e-mail to an access point 51 of the provider 50 through the short-distance wireless communication network 30, the mobile communication network 20, and the public communication network 40, and shifts to mail transmission processing with respect to the provider 50 in Step ST 64.

In Step ST 64, the wireless communication apparatus 3 carries out processing in accordance with SMTP between the provider 50 and the e-mail server 53. The SMTP carries out communication by exchange between a command (Command) from the wireless communication apparatus 3 and a reply (Reply) on the provider 50 side. The wireless CPU 70 controls a base band control section 63 and a wireless control section 51 to transmit command packet from an antenna section 62 and receive a response packet with respect to command packet.

Namely, first, the wireless communication CPU 70 transmits a HELO command packet S 11 indicative of a declaration for starting use of a communication line connected to the provider 50 to the provider 50. At this time, the wireless communication CPU 70 transmits the HELO command packet S 11 with a domain name as local host. On the other hand, the provider 50 sends as a reply a response packet S 12 including a processing result (code 250: SUCCESS) to the effect that the HELO command packet S 11 is accepted to enable communication in accordance with SMTP.

Subsequently, the wireless communication CPU 70 transmits a MAILFROM command packet S 13 for notifying the provider 50 of a transmitter name (From:). At this time, the wireless communication CPU 70 transmits a MAILFROM command packet S13 including a mail address of FROM line stored in a network setting information memory section 68. On the other hand, the provider 50 transmits a response packet S 14 including a processing result (code 250: SUCCESS) to the effect that the MAILFROM command packet S13 was accepted to the wireless communication apparatus 3. Here, the wireless communication CPU 70 transmits the MAILFROM command packet S 13 including, as a mail address, a user name, a sub-domain name, a domain name, an organization ID, and a country ID.

Next, the wireless communication CPU 70 transmits a RCPT command packet S13 to the provider 50. At this time, the wireless communication CPU 70 transmits a MAILFROM command packet S13 including a mail address of the host equipment 4. On the other hand, the provider 50 transmits a response packet S 14 including a processing result (code 250: SUCCESS) to the effect that the MAILFROM command packet S13 was accepted to the wireless communication apparatus 3.

Next, the wireless communication CPU 70 transmits a RCPT TO command packet S 15 for notifying the provider 50 of a destination (To:) contained, for example, in an Internet network 40a. At this time, the wireless communication CPU 70 transmits a RCPT TO command packet S15 including a mail address of equipment at a destination. On the other hand, the provider 50 transmits, as a reply, a response packet S 16 including a processing result (code 250: SUCCESS) to the effect that the RCPT TO command packet S15 was accepted to the wireless communication apparatus 3.

Next, the wireless communication CPU 70 transmits a DATA command packet S17 for notifying the fact that transmission of message data (DATA) starts to the provider 50. On the other hand, the provider 50 transmits a response packet S 18 including a processing result (code 250: SUCCESS) to the effect that the DATA command packet S17 was accepted to the wireless communication apparatus 3.

The wireless communication CPU 70 carries out processing for reading, in response to the acceptance of the response packet S 18, Internet mail data including message data from the RAM 69 to transmit it to the provider 50. Here, the wireless communication CPU 70 controls so as to transmit a packet S 19 including message data in unit of one line. The wireless communication CPU 70 transmits the packet S 19 over plural times, and when transmitting all data included in the message data, transmits, in response to the completion of transmission of the mail body contained in the e-mail, CR/LF. CR/LF (CR: return, LF: open a new line), and receives a response packet S 21 including a processing result (code 250: SUCCESS) from the provider 50 that responded thereto.

Next, in Step ST 65, the wireless communication CPU 70 carries out processing for deleting message data stored in the RAM 69 in response to the acceptance of the response packet S21. The wireless communication CPU 70 then outputs a response packet R 51 indicative of a mail transmission response indicative of completion of transmission of an e-mail to the e-mail server 53 to the host equipment 4.

In the wireless communication system 1 provided with the wireless communication apparatus 3 and the host equipment 4 for carrying out such processing as described above, when an e-mail is transmitted to the e-mail server 53, SMTP is started as a network application protocol stored in the wireless communication apparatus 3 to enable mail transmission processing between the wireless communication apparatus 3 and the e-mail server 53.

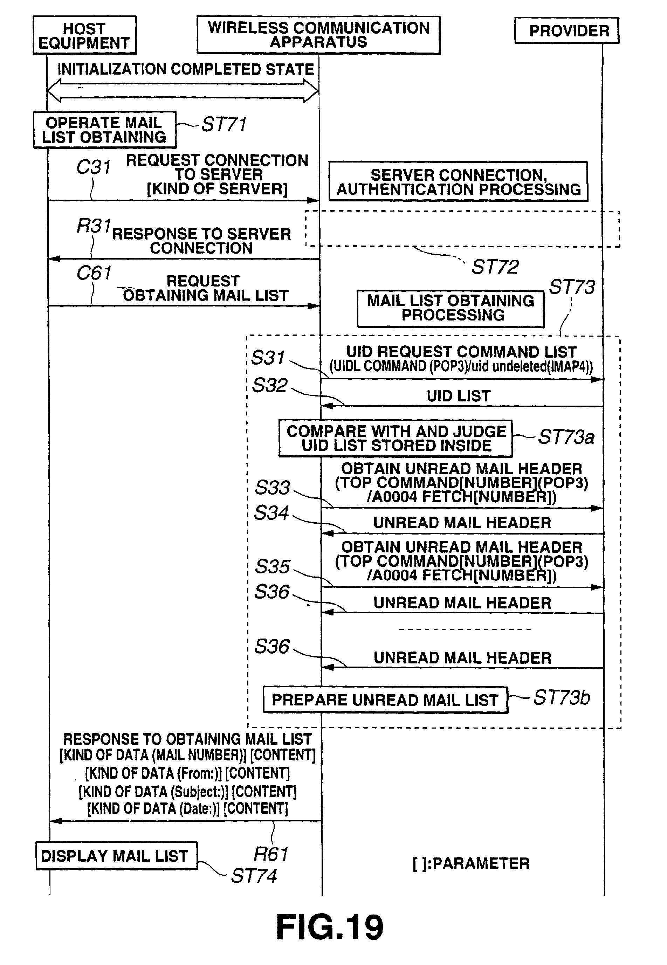

Description will be made hereinafter, with reference to FIG. 19, of the processing procedure of the wireless communication apparatus 3 and the host equipment 4 when a mail list showing a list of e-mails that can be received by the host equipment from the e-mail server 53 on which are mounted network application protocols such as POP, and IMAP for receiving an e-mail.

The processing for obtaining an e-mail is conducted in the initialization completed state as described above. According to FIG. 19, first, in Step ST 71, the host CPU 92 inputs an operation input signal for obtaining a mail list in response to the fact that an operation input mechanism of the host equipment 4 is operated by the user. In response thereto, the host CPU 92 transmits a command packet C31 including a server connection request as a command name as described in FIG. 14 to the wireless communication apparatus 3 to carry out, in Step ST 72, server connection processing between the wireless communication apparatus 3 and the provider 50, user authentication processing, if necessary.

The wireless communication CPU 70 of the wireless communication apparatus 3 outputs, in response to the completion of the server connection processing and the user authentication processing in Step ST 72, outputs a response packet R 31 including the server connection response to the server connection request to the host equipment 4.

Next, the host equipment 4 transmits, in response to the fact that the response packet R31 is input, a command packet C61 including a mail list obtaining request as a command name to the wireless communication apparatus 3 to start mail list obtaining processing between the wireless communication apparatus 3 and the provider 50 in Step ST 73.

In Step ST 73, first, the wireless communication CPU 70 transmits a command packet S31 including a UID list request for requesting a mail list comprising unique ID (UID) to the provider 50. Here, the wireless communication CPU 70 starts POP 3 as a network application protocol to transmit a UIDL command when a mail list is obtained, and starts IMAP 4 to transmit a uid undeletede command when a mail list is obtained.

On the other hand, the provider 50 obtains a mail list comprising unique ID stored in the e-mail server 53 to transmit it as a response packet S 32 to the wireless communication apparatus 3. At this time, the provider 50 obtains a mail list comprising a row of unique Ids from a mail box of the e-mail server 53.

In next Step ST 73a, the wireless communication CPU 70 obtains a mail list contained in a response packet S32, and reads the unique ID stored in the individual information memory section 67. The wireless communication CPU 70 compares the unique ID contained in the mail list from the e-mail server 53 with the unique ID contained in the individual information memory section 67. The wireless communication CPU 70 judges, when a decision is made that the unique ID contained in the mail list is present in the individual information memory section 67, an e-mail of the unique ID as a read mail, and judges, when a decision is made that the unique ID contained in the mail list is not present in the individual information memory section 67, an e-mail of the unique ID as an unread mail.

Further, in Step ST 73a, the wireless communication CPU 70 reads, when terminal ability information stored in a terminal ability information memory section 93 of the hot equipment 4 is stored in a terminal setting memory section 6, the terminal ability information, to classify and obtain the unique ID contained in the mail list every host equipment. And, the wireless communication CPU 70 compares the unique ID of an e-mail obtained by the host equipment 4 with the unique ID contained in the mail list to judge the read mail or unread mail.

Next, the wireless communication CPU 70 transmits to the provider 50 a command packet S33 containing, as a parameter, a mail number corresponding to the unique ID, with an unread mail header obtaining request for obtaining information contained in the header part of an e-mail of the unique ID judged as an unread mail in Step ST 73a. The wireless communication CPU 70 transmits, when obtaining information contained in the header part of the unread mail by POP3, a TOP command, and transmits a FETCH command when IMAP 4 is started to obtain a mail list.

The provider 50 with respect to the command packet S33 obtains an unread mail header obtaining request contained in a command name and a mail number with respect to the unique ID contained in a parameter. The provider 50 obtains a header part of an unread mail of the mail number obtained from the e-mail server 53 to transmit a response packet S 34 including a header part of the unread mail to the wireless communication apparatus 3.

Thereafter, the wireless communication CPU 70 repeats processing for transmitting a command packet S33 in which a mail number contained in a parameter is changed to obtain a response packet S34 thereby obtaining header parts of all unread mails.

In next Step ST 73b, the wireless communication CPU 70 uses information contained in header parts of a plurality of unread mails obtained in the above-described processing to carry out processing for preparing an unread mail list. First, the wireless communication CPU 70 analyses information contained in the header part of the unread mail to classify it into information elements contained in the header part such as FROM;, Subject:, Cc:, and Date: and contents of various information elements. Next, the wireless communication CPU 70 adds a mail number to the unread mail, and prepares a response packet R61 with a mail number of an unread mail and a content contained in the header part of the unread mail as a parameter to output it to the host equipment 4.

In next Step ST 74, the host equipment 4 removes an unread mail list from the response packet R61 to display a mail number, a unique ID, and an unread mail list having information contained inn the header part on the display mechanism.

The wireless communication system 1 provided with the wireless communication apparatus 3 and the host equipment 4 for carrying out the processing as described starts, when a mail list is obtained by the host equipment 4, POP or IMAP as a network application protocol stored in the wireless communication apparatus 3 to carry out communication between the wireless communication apparatus 3 and the provider 50 to enable carrying out the mail list obtaining processing.

At this time, the wireless communication apparatus 3 uses the unique ID of the read e-mail stored as individual information to judge whether the e-mail that can be obtained by the host equipment 4 contained in the obtained mail list is unread or read to prepare an unread mail list according to the host equipment to enable outputting it to the host equipment 4.

Further, according to the wireless LAN system 1, terminal ability information is stored in the terminal ability memory section 65 in advance from the host equipment 4 whereby a type or a kind of the host equipment 4, and an unread mail list can be classified and prepared according to an application program stored in the host equipment 4.

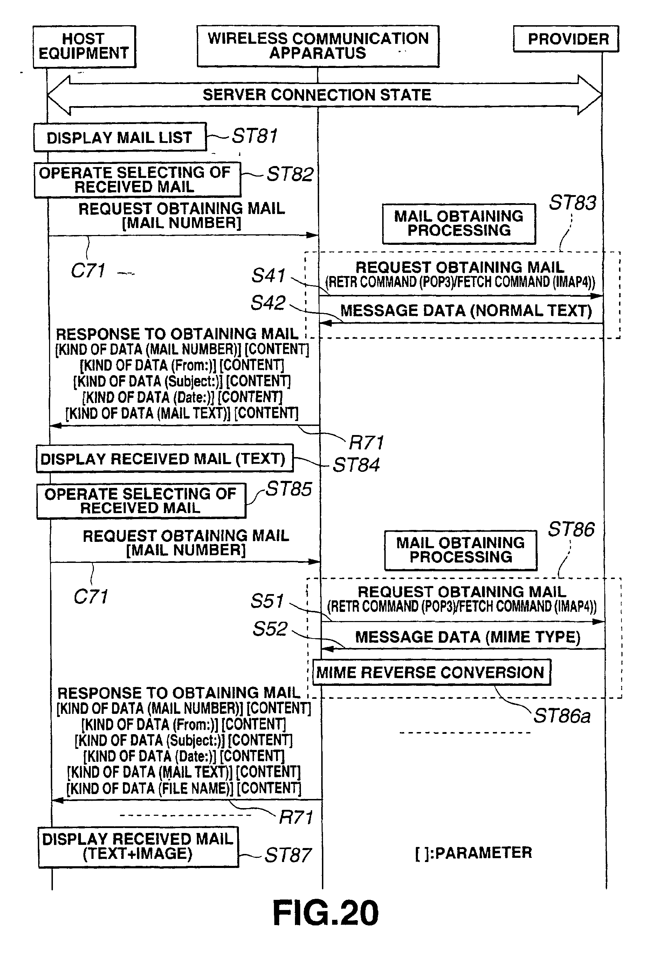

Next, description will be made, with reference to FIG. 20, of the processing procedure of the host equipment 4, the wireless communication apparatus 3, and the provider 50 when the e-mail selected from the mail list obtained by the processing described with reference to FIG. 19.

Obtaining the e-mail selected from the mail list presupposes the completion of processing for connecting the host equipment 4 and the e-mail server 53 described with reference to FIG. 14, and the server connection state of the host equipment 4, the wireless communication apparatus 3 and the provider 50.

According to FIG. 20, first, in Step ST 81, a host CPU 92 of the host equipment 4 inputs, in response to the fact that the operation input mechanism of the host equipment 4 is operated by the user, an operation input signal to the effect that the mail list obtained by the processing described with reference to FIG. 19 is displayed to display it on the display mechanisms.

In next Step ST 82, the host CPU 92 of the host equipment 4 inputs, in response to the fact that the operation input mechanism of the host equipment 4 is operated by the user, an operation input signal to the effect that the e-mail received from the mail list being displayed is selected. In response thereto, the host CPU 92 transmits a command packet C 71 containing a mail obtaining request as a command name and a mail number as a parameter to the wireless communication apparatus 3.

A wireless communication CPU 70 of the wireless communication apparatus 3 starts, in response to the command parameter C71, mail obtaining processing in Step ST 83. The wireless communication CPU 70 transmits, in the mail obtaining processing, first, to the provider 50 a command packet S 41 containing a mail obtaining request for requesting down-loading the e-mail stored in the e-mail server 53. Here, the wireless communication CPU 70 starts POP3 as a network application protocol to transmit a RETR command containing a mail number as a parameter when an e-mail is obtained, while it starts IMAP4 to transmit a FETCH command containing a mail number as a parameter when an e-mail is obtained.

In response to the command packet S 41, the provider 50 obtains an e-mail of a mail number contained as a parameter from the e-mail server 53 to transmit a response packet S 42 containing an Internet mail data to the wireless communication apparatus 3. Here, the Internet mail data transmitted from the provider 50 to the wireless communication apparatus 3 is normally described in a text type, and the e-mail describing type is an Internet mail type as shown in FIGS. 15 and 16.

In response to the response packet S 42, the wireless communication CPU 70 of the wireless communication apparatus 3 divides the response packet S 41 into information for describing the header part and information for describing the body part. The wireless communication CPU 70 prepares a parameter every information for describing the header part obtained by the division, and information for describing the body part to prepare a response packet R71 to output it to the host equipment 4. At this time, the wireless communication CPU 70 outputs to the host equipment 4 the response packet R 71 containing a parameter with a mail number, FROM;, Subject:, Cc:, Date:, and the mail body as a parameter class, and with a content of each parameter class as a parameter content.

In Next Step ST 84, the host CPU 92 displays, in response to the input of the response packet R 71, a mail screen on which the header part and the body part are described as shown in FIG. 15 or 16 on the display mechanism.

In Next Step ST 85, the host CPU 92 carries out the processing similar to that of the aforementioned Step ST 82 to transmit the command packet C71 to the wigless communication apparatus 3.

In response to the command packet C 71, the wireless communication CPU 70, in Step ST 86, transmits a command packet S 51 containing a mail obtaining request between the former and the provider 50 to the provider 50, and receives a response packet S 52 containing message data according to the command packet S 51. When the message data contained in the response packet S 52 is described in the MIME type, the wireless communication CPU 70 shifts to Step ST 86a.

In Step ST 86a, the wireless communication CPU 70 converts, reversely, for example, to the processing for encoding data from the host equipment 4 in the MIME system and transmitting it, data described in the MIME system into a signal type that can be displayed by the host equipment 4.

Next, the wireless communication CPU 70 divides the response packet S 42 into information for describing the header part and information for describing the body part, and prepares a parameter every information for describing the header part, information for describing the body part, and data after converted to prepare a response packet R 71 to output it to the host equipment 4. At this time, the wireless communication CPU 70 outputs to the host equipment 4 the response packet R 71 containing a parameter with a mail number, FROM;, Subject:, Date:, and the mail body, a file name as a parameter class, and with a content of each parameter class as a parameter content.

In Next Step ST 87, the host CPU 92 displays, in response to the input of the response packet R 71, a mail screen on which the header part and the body part as described as shown in FIG. 15 or 16 is displayed on the display mechanism. At this time, the host CPU 92 displays those other than data of an attached file as characters, and displays images shown by data of the attached file.

The wireless communication system 1 provided with the wireless communication apparatus 3 and the host equipment 4 for carrying out the processing as described starts, when a mail list is obtained by the host equipment 4, POP or IMAP as a network application protocol stored in the wireless communication apparatus 3 to carry out communication between the wireless communication apparatus 3 and the provider 50 to enable carrying out the mail obtaining processing.

The wireless LAN system 1 not only carries out the processing for transmit-receiving the e-mail between the e-mail server 53 and the host equipment 4, but also is able to receive information stored in the WWW server by the host equipment 4.

In the wireless communication apparatus 3, it is necessary to store HTTP as a network application protocol in ROM 71, to store a book mark indicative of hysteresis of URL as individual information, and to store address information of the proxy server as network setting information.

The host equipment 4 and the wireless communication apparatus 3 are provided with an interface for issuing a command and a response for obtaining information stored in the WWW server. The host equipment 4 designates URL for designating information stored in the WWW server as a parameter of a command packet when information stored in the WWW server is obtained. Further, in the wireless communication apparatus 3 are contained a parameter class for displaying data on the host equipment 4 as a response and data.

As described above, according to the wireless LAN system 1 which applies the present invention, since a network application protocol is mounted on the wireless communication apparatus 3, it is not necessary to mount a network application protocol within the host equipment 4 when communication is conducted between the public communication network 40 and the host equipment 4. Further, according to the wireless LAN system 1, it is possible to establish a connecting relationship between the host equipment 4 not provided with a network application protocol and the public communication network 40.

Furthermore, according to the wireless LAN system 1, not only setting information in connection with a network protocol in the wireless communication apparatus 3, but also setting information in connection with a network application are fixedly stored in the net work setting memory section 68 for use internally of the wireless communication apparatus 3. Therefore, it is not necessary to carry out setting in connection with a network application protocol every host equipment 4. Accordingly, in the wireless LAN system 1, it is possible to lighten the burden of the user for carrying out setting in connection with a network application protocol.

Moreover, according to the wireless LAN system 1, by the packet constitution of the type as shown in FIGS. 9 and 10 A, B, a command packet and a response packet can be input and output between the host equipment 4 and the wireless communication apparatus 3, and therefore, even the host equipment 4 of any class, the wireless communication apparatus 3 is mounted whereby a connection relationship between the host equipment 4 and the public communication network 40 is established to enable conduction of communication in accordance with a network application protocol.

Further, according to the wireless LAN system 1, since individual information used when a network application protocol is executed is uniformly controlled internally of the wireless communication apparatus 3, even if individual information is set by a different type of host equipment, unified individual information can be prepared, and network application environment unified between pieces of host equipment 4 can be provided by using the unified individual information.

Moreover, according to the wireless LAN system 1, even in cases where the wireless communication apparatus 3 is mounted on the host equipment 4 different in setting from the unified individual information, it can be used in the network application environment using the unified individual information. Namely, even the host equipment 4 storing therein individual information of others, the individual information stored in the wireless communication apparatus 3 is used whereby it can be used as own host equipment 4 instantly.

Furthermore, interface means capable of input-outputting the packet constituted as shown in FIG. 9 and FIG. 10 A, B described above is provided on household electric appliances, and the wireless communication apparatus 3 is mounted on the household electric appliances, whereby a connection relationship between the household electricappliances and the public communication network 40 is established to enable the provision of a network application capable of receiving an e-mail or data described in HTML from the e-mail server 53 and the WWW server.

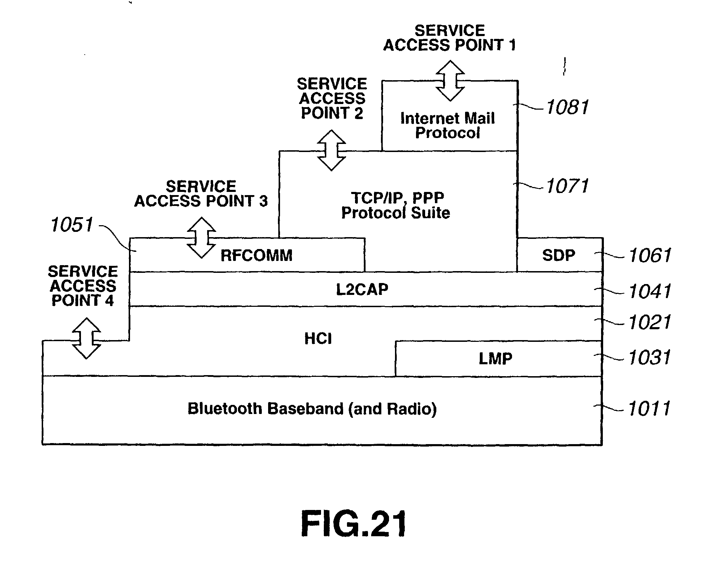

In the embodiment described above, there are network protocols such as a Bluetooth protocol, TCP/IP, and PPP, shown in FIG. 6, and application protocols such as SMTP, POP/IMAP, and HTTP to form a protocol stack. More concretely, there is a protocol as shown in FIG. 21, and it is possible to select a protocol used by a different service access point from the host equipment 4.

That is, a protocol to be started can be switched adaptively according to the ability of the host equipment 4. For example, in cases where the service access point 4 is used, a base band 1011, a HCI (Host Control Interface) 1021, and an LMP (Link Management Protocol) 1031 constituting a Bluetooth lower protocol are started. Further, in cases where the service access point 3 is used, an L2CAP (Logical Link Control & Adaptation Protocol) 1041, an RFCOMM 1051 and a SDP 1061 constituting a Bluetooth upper protocol in addition to the above-described Bluetooth lower protocol are started. Further, in cases where the service access point 2 is used, a network communication protocol 1071 in addition to the aforementioned Bluetooth lower protocol and the Bluetooth upper protocol is started. Further, in cases where the service access point 1 is used, a network communication protocol 1081 in addition to the aforementioned Bluetooth upper protocol, the Bluetooth lower protocol, and the network communication protocol is started.

Now, description will be made of, with reference to FIG. 21, a protocol stack constituted by protocols stored in ROM 71 of the wireless communication apparatus 3.

At the lowest position of a protocol stack, a Baseband 1011 (and Radio) is present as a physical layer. In the physical layer, digital is converted into analog, and data is transmitted from an antenna section 62 or data is received by the antenna section 62. In this physical layer, primary modulation is carried out in accordance with the sequence of 0, 1 of digital data, which is further put on a carrier wave of 2.4 GHz band and transmitted. The carrier wave is constantly switched by frequency hopping which changes frequency every transmission (slot) of one data.

The transmission and reception of data are alternately carried out every slot. In the receiving slot, a carrier wave of 2.4 GHz band is removed from a signal received by the antenna, after which demodulation is further carried out to remove digital data of 0, 1 sequences. Frequency of the carrier wave that should be removed is constantly changed by the frequency hopping, but the hopping sequence is known in advance according to the other communication party.

On the physical layer are mounted protocols in the form of a link layer comprising an LMP (Link Management Protocol) 1031, a HCI (Hot Control Interface) 1021, a L2CAP (Logical Link Control & Adaptation Protocol), and a RFCOMM 1051. A main part of the link layer is to control processing for constructing a short-distance wireless communication network 30 to which the Bluetooth system is applied.

In the processing in the link layer, for example, a variety of communication information are added to original data and sent to the other party. When data is received, a reply is sent back whether or not the data is properly received. If not received property, re-sending is requested. In cases where the other party cannot be received even if data is sent many times, sending of data is given up when reaching a certain limit. When a receiving buffer overflows, the other party is requested to stop transmission temporarily. To data is added, in addition to information in connection with these communication control, a symbol for detecting and correcting an error in order to overcome an error produced in a communication line.

The HCI 1021 provides an interface between host equipment 4 provided in the Bluetooth system. Further, the HCI 1021 carries out processing for providing a logical interface in the connection form in cases where the host equipment 4 is a personal computer.

The LMP 1031 controls the link state relative to a connection destination of communication according to the Bluetooth system, which carries out the following:
Establishment and release of the connection state;
mode control according to presence or absence of data to be transmitted and received, and frequency of communication;
switching of kinds of packets according to the condition of a communication line;
authentication if data communication is permitted; and
enciphering at the time of data communication.

In the L2CAP 1041, a logical channel is defined. A logical channel, in which the connection between communication equipments corresponding to two Bluetooth systems is physically joined by a single communication line, can be defined in plural. Thereby, data of various kinds of upper protocols can be transmitted and received simultaneously. Further, in cases where size of data transmitted from the upper protocol is large, that (data) is fractionalized into size of a packet defined in the Base band 1011. The data is fractionalized on the transmission side and sent, and on the receiving side, that is reconstructed to the original size.

Exchange of information between the host equipment 4 corresponding to the Bluetooth system at a communication destination with respect to the transfer rate and the speed of a response to the transmission is also carried out by the processing in the L2CAP 1041.

The RFCOMM 1051 provides a expansion AT command for carrying out control in the link layer corresponding to the Bluetooth system. The RFCOMM 1051 provides an emulation function of a serial port.

On the link layer is mounted a network communication protocol 1071 as a transport layer. The network communication protocol 1071 provides an interface for the data transfer on the Internet. The network communication protocol 1071 comprises TCP (Transmission Control Protocol), UDP (User Datagram Protocol), IP (Internet Protocol), ICMP (Internet Control Message Protocol), PPP (Point to Point Protocol), and DNS (Domain Memory System) resolver.,

On an application layer above a transport layer is mounted a network application protocol 1081. In the network application protocol 1081, an Internet mail protocol (Internet Mail Protocol) is mounted to provide an interface for transmitting and receiving a mail between mail servers.

The network application protocol 1081 includes, for example, POP 3 (Post Office Protocol Version 3) for receiving an e-mail from a mail server, IMAP 4 (Internet Message Access Protocol Version 4), and SMTP (Simple Mail Transfer Protocol) for transmitting an e-mail to a mail server.

Further, the wireless communication apparatus 3 is provided with a network setting memory section 68 internally of the system, and network setting information is stored in the network setting memory section 68. The network setting information stored in the network setting memory section 68 is used internally for a protocol sued internally of the wireless communication apparatus 3. The network setting information includes, as described above, a user ID for a protocol of PPP, a user password, an access point telephone number, a ail server address used in a protocol, a mail user ID, and a mail user password.

In the aforementioned embodiment, it is supposed that the wireless communication apparatus 3 supports a protocol not possessed by the host equipment 4, and the network setting information stored in the network setting memory section 68 is utilized merely for the internal processing of the wireless communication apparatus 3.

However, the host equipment 4 is provided with some protocols out of protocols already stored in the ROM 71 internally of the wireless communication apparatus 3, and in cases where the protocols require network setting information internally of the wireless communication apparatus 3, mere selection is left, that is, the information is set on the host equipment 4 side to use a protocol of the host equipment 4 or use of the protocol on the host equipment 4 side is given up to use a protocol within the wireless communication apparatus 3. In the former case, the user is caused to take operation of setting, while in the latter case, the protocol provided by the host equipment 4 becomes disabled to use resulting in uselessness. Particularly, in cases where processing ability of the host equipment 4 is high, or in cases where a protocol has a high function, there occurs a head in processing ability between the wireless communication apparatus 3 and the host equipment 4.

So, in the embodiment described next, in cases where the wireless communication apparatus 3 has network setting information necessary for the protocol provided by the host equipment 4, means for the host equipment 4 to obtain the network setting information from the wireless communication apparatus 3 is prepared whereby the host equipment 4 obtains the network setting information through an application software to apply the information to protocol operation. Thereby, it is possible to carry out network application operation using the wireless communication apparatus 3 while making use of a protocol of the host equipment 4.

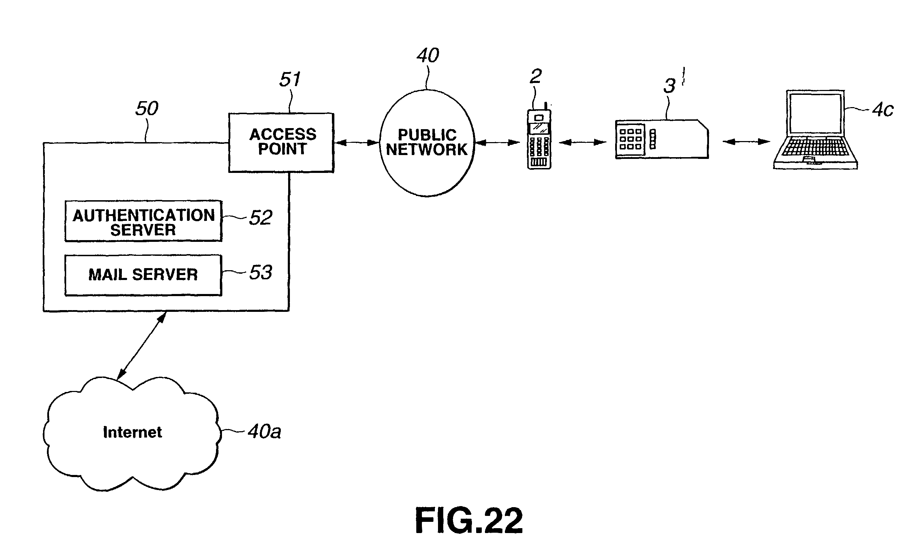

The present embodiment describes that, for example, as shown in FIG. 22, supposing a mail processing terminal 4c by a personal computer (PC) as host equipment 4, PC applied with the wireless communication apparatus 3 dial-up connects with a provider 50 through a portable telephone 2 to utilize a mail service of the provider. The system constitution and its operation in the present embodiment are similar to those of the above-described embodiments.

The present embodiment contemplates cases where the mail processing terminal 4c by PC has a network protocol of PPP, TCP/IP, and an application (mail) protocol such as POP, and SMIT.

PC is generally high in processing ability as compared with a processor of the wireless communication apparatus 3, and therefore, in cases where both has the same protocol, it is desirable to use a protocol on the PC side. However, in that case, it is necessary to set network setting relative to the protocol on the PC side.

So, in the present embodiment, there is provided means for obtaining network setting information used for a protocol provided by the mail processing terminal 4c by PC from the network setting memory section 68 of the wireless communication apparatus 3.

The aforementioned means is realized by expanding a host equipment interface function in the embodiment previously described.

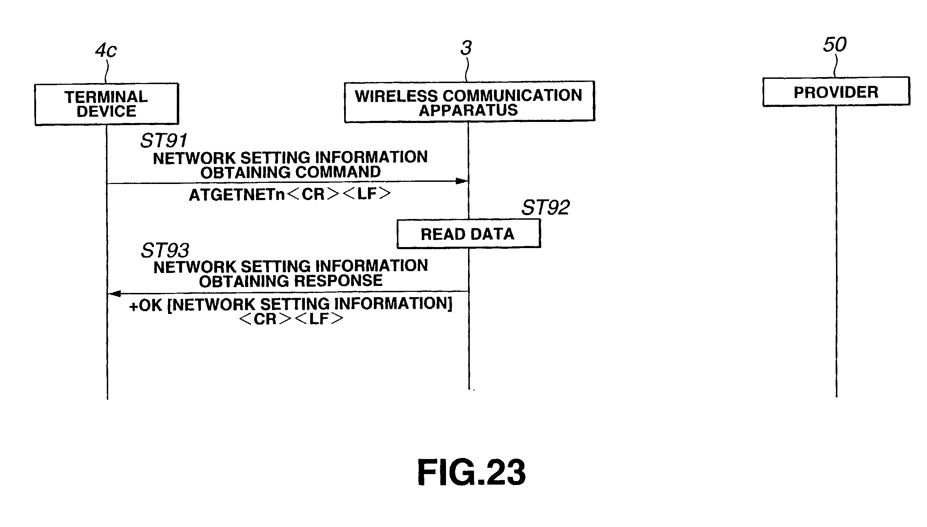

Namely, the means is realized by a command issued to the wireless communication apparatus 3 from the mail processing terminal 4c by PC, and a response from the wireless communication apparatus 3 with respect thereto. For example, the mail processing terminal 4c by PC describing a sequence for obtaining network setting information by a system of an AT command issues, in Step ST 91, as shown in FIG. 23, a network setting information obtaining command {ATGETNETn < CR ><LF>} to the wireless communication apparatus 3. And, the wireless communication apparatus 3 interprets, in next Step ST 92, the network setting information obtaining command {ATGETNETn < CR ><LF>} received to read network setting information from the network setting memory section 68, and returns, in next Step ST 93, a network setting information obtaining response {+OK[network setting information < CR ><LF>} to the mail processing terminal 4c.

The mail processing terminal 4c receives the network setting information obtaining response {+OK[network setting information < CR ><LF>} from the wireless communication apparatus 3.

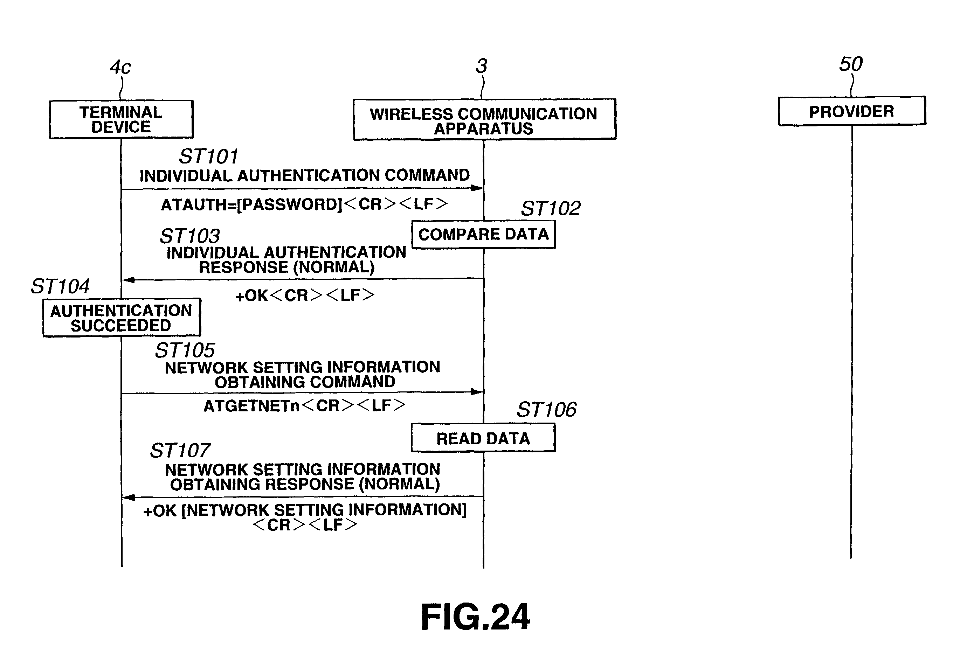

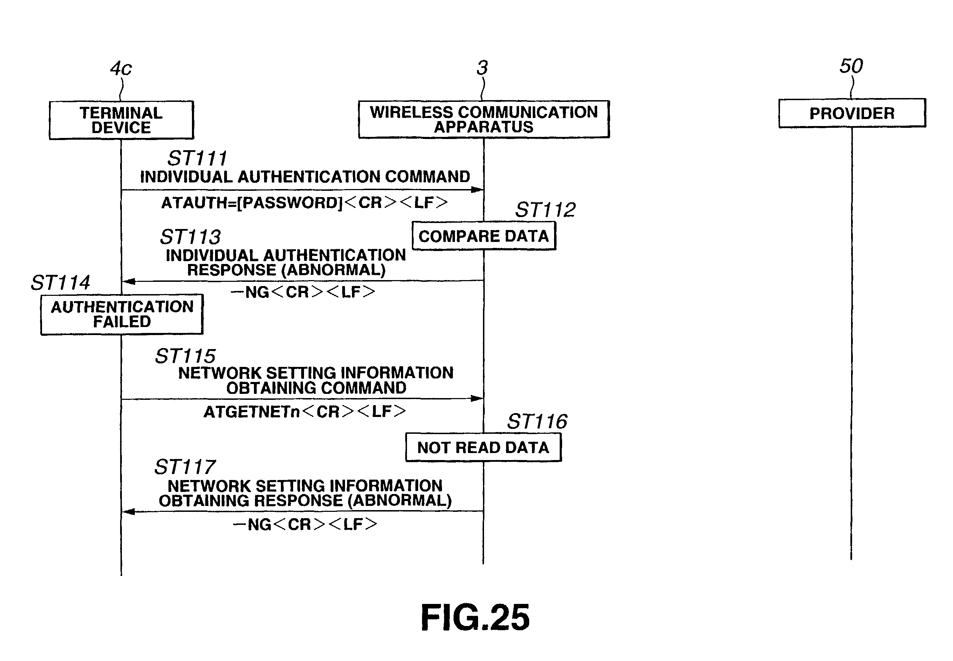

In this manner, the mail processing terminal 4c by PC designates a number n for giving a class of network setting information to a specific appellation, AT command {GETNET} to thereby obtain the network information designated. Further, since the network setting information contains information such as ID for discriminating individual information, and a password, it is desirable that this processing cannot be conducted from a suitable user. So, it is designed so that in cases where individual authentication has succeeded as shown in FIGS. 24 and 25 using an individual authentication sequence in the embodiment described previously, the network setting information can be obtained normally, otherwise cannot be obtained.

That is, in the operation example shown in FIG. 24, the mail processing terminal 4c by PC issues, first, in Step ST 101, an individual authentication command {AUTH = [password] <CR><LF>} to the wireless communication apparatus 3.

And, the wireless communication apparatus 3 interprets, in Step ST 102, the individual authentication command {AUTH = [password] <CR><LF>} received from the mail processing terminal 4c to compare an individual authentication password stored in a command parameter with an individual authentication password stored in the individual authentication password memory section 66. In this operation example, since the individual authentication passwords are coincided, an individual authentication response {+OK<CR><LF>} indicative of the fact that individual authentication was conducted normally is returned to the mail processing terminal 4c.

Next, the mail processing terminal 4c by PC confirms, in next Step ST 104, that authentication processing has been succeeded by the individual authentication response {+OK<CR><LF>} received from the wireless communication apparatus 3, and issues, in next Step ST 105, a network setting information obtaining command {ATGETNETn <CR><LF>} to the wireless communication apparatus 3.

And, the wireless communication apparatus 3 interprets, in next Step ST 106, the network setting information obtaining command {ATGETNETn <CR><LF>} received from the mail processing terminal 4c to read the network setting information from the network setting memory section 68, and returns, in next Step ST 107, a network setting information obtaining response {+OK[network setting information]<CR><LF>} to the mail processing terminal 4c.

As in the operation example shown in FIG. 24, the mail processing terminal 4c which has succeeded the authentication processing is able to receive the network setting information from the wireless communication apparatus 3.

Further, in the operation example shown in FIG. 25, the mail processing terminal 4c by PC issues, first, in Step ST 111, an individual authentication command {AUTH = [password] <CR><LF>} to the wireless communication apparatus 3.

And, the wireless communication apparatus 3 interprets, in Step ST 112, the individual authentication command {AUTH = [password] <CR><LF>} received from the mail processing terminal 4c to compare an individual authentication password stored in a command parameter with an individual authentication password stored in the individual authentication password memory section 66. Since in this operation example, the individual authentication passwords are not coincided, the apparatus 3 returns, in next Step ST113, an individual authentication response {-NG<CR><LF>} indicative of the fact that the individual authentication has not been conducted normally to the mail processing terminal 4c.

Next, the mail processing terminal 4c by PC confirms, in next Step ST 114, that the authentication processing has been failed by the individual authentication response {-NG<CR><LF>} received from the wireless communication apparatus 3. In this case, for example, the mail terminal 4c stops issuing of a network setting information obtaining command to end a network setting information obtaining process. Further, in cases where even if the authentication processing has been failed, a network setting information obtaining command {ATGETNETn <CR><LF>} was issued by the wireless communication apparatus 3, as shown in Step ST 115, the wireless communication apparatus 3 does not read, even if the former received the network setting information obtaining command {ATGETNETn <CR><LF>} from the mail processing terminal 4c, network setting information from the network setting memory section 68, but returns, in next Step ST 117, a network setting information obtaining response {-NG<CR><LF>} to the mail processing terminal 4c.

As in the operation example shown in FIG. 25, the mail processing terminal 4c which has not succeeded the authentication processing is not able to receive network setting information from the wireless communication apparatus 3.

In the following, software constitution of the mail processing terminal 4c will be described with reference to a concrete embodiment.

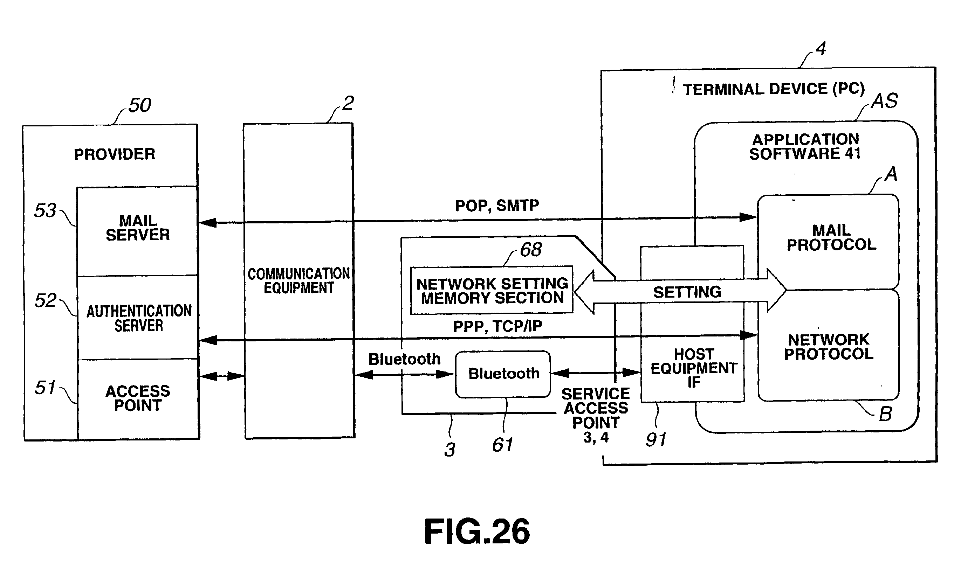

The mail processing terminal 4c carries out, as shown in FIG. 26, an operation for obtaining the network setting information through an application software AS. Further, the network setting information obtained from the wireless communication apparatus 3 is applied to a protocol provided by the mail processing terminal 4c by PC.

In the embodiment shown in FIG. 26, since the mail processing terminal 4c by PC is already provided with a network protocol A of PPP, TCP/IP corresponding to the network communication protocol 1071, and a mail protocol B such as POP, SMIT corresponding to the network application protocol 1081, the mail processing terminal 4B requests the wireless communication apparatus 3 of only a protocol of Bluetooth. That is, the service access point 3 or the service access point 4 in FIG. 21 is to be used. Accordingly, network setting information such as a user ID, and a user password necessary for a sequence of PPP, and a mail ID, a mail password, and a mail server name necessary for a mail protocol are obtained from the network setting memory section 68 of the wireless communication apparatus 3 to apply them to the corresponding protocol. In the above-described embodiment, all protocol processing have been carried out on the wireless communication apparatus 3 side in order to utilize the same application consequently, but in the present embodiment, the same application can be realized while using the protocol provided by the mail processing terminal 4c by PC.

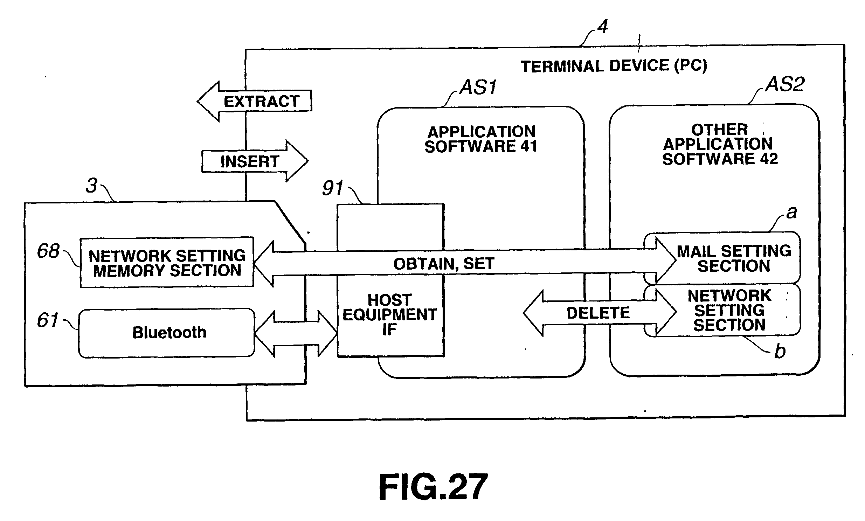

Further, another concrete examples of software constitution of the mail processing terminal 4c contemplated include application softwares for carrying out setting with respect to network application softwares which are already commercially available, such as dial-up network (PPP) of Microsoft Corporation, Microsoft Outlook, Microsoft Internet Explorer, Eudora of QUALCOM Incorporated, and Netscape of Netscape Communications Corporation. As shown in FIG. 27, the application software AS1 is a permanently stationary program in which when the wireless communication apparatus 3 is applied (inserted) to the mail processing terminal 4c by PC, network setting information is obtained from the wireless communication apparatus 3 to input a corresponding item into a setting window (a mail setting part a and a network setting part b) of the existing network application software AS2, whereas when the wireless communication apparatus 3 is removed (extracted), the network setting information item is deleted from the setting window.

Thereby, also in cases where the existing network application software is used, network setting information of the wireless communication apparatus 3 is used whereby a network application which is unnecessary for setting with respect to the mail processing terminal 4c by PC can be provided for the user.

### Industrial Applicability

As described in detail above, the communication control apparatus according to the present invention is provided with control means in which a connection relationship with a communication network through a short-distance wireless communication network is set on the basis of network setting information stored in memory means to control transmission and reception of data between a network server and host equipment in accordance with network application protocols store in the memory means. Therefore, even when a plurality of host equipment are handled, network setting and application setting when a network application is used every host equipment need not be conducted, and a burden on the user when a network application is utilized can be lightened.

Further, in the host equipment according to the present invention, in cases where protocols of the communication control apparatus are already provided, network information within the communication control apparatus is used to cause predetermined network application control operation to conduct while using protocols provided by the host equipment.

Further, in the communication method according to the present invention, a connection relationship between a wireless control apparatus and a communication network through a short-distance wireless communication network is set using network setting information which is information in connection with a communication network outside the short-distance communication network stored in the communication control apparatus, and transmission and reception of data can be conducted between the communication control apparatus and a network server within the communication network can be conducted in accordance with network application protocols stored in the communication control apparatus. Therefore, even when the communication control apparatus is used for a plurality of host equipment, network setting and application setting when a network application is used every host equipment need not be conducted, and a burden on the user when a network application is utilized can be lightened.

Further, in the communication method according to the present invention, in carrying out give and receive of a packet between the communication control apparatus and host equipment, a packet in a packet format common to other host equipment contained in a short-distance wireless communication network is produced to effect transmit and receive of the packet. Therefore, even in cases where plural kinds of host equipment are contained in the short-distance wireless communication network, a common interface can be provided.

Furthermore, in the communication method according to the present invention, data provided in RFC (Request For Comments) are transmitted en bloc or divisionally from the host equipment to the communication control apparatus, message data contained in an e-mail are constructed within a memory region in the communication control apparatus using data transmitted from the host equipment to the communication control apparatus, and the message data constructed within the memory region are transmitted to an e-mail server within the external communication network through the short-distance wireless communication network. Therefore, even when the communication control apparatus is used for a plurality of host equipment, construction of message data and transmission of the message dat to the e-mail server can be conducted within the wireless communication apparatus to enable lightening of a burden on the user when the e-mail is transmitted.

## Claims

1. A communication control apparatus comprising:
wired communication means for transmit-receiving data between mounted host equipment;
short-distance wireless communication means for transmit-receiving data to and from an external communication network through a short-distance wireless communication network;
memory means for storing therein network setting information which is information related to said communication network, and a network application protocol for controlling processing of a network server within said communication network; and
control means for setting a connection relationship with respect to the communication network through the short-distance wireless communication network on the basis of network setting information stored in the memory means and for controlling the transmit-receiving of data between said network server and said host equipment in accordance with the network application protocols stored in said memory means.

2. The communication control apparatus according to claim 1 wherein said memory means stores, as a network application protocol, a mail protocol for transmit-receiving an e-mail between said network server and said host equipment; and
said control means controls the transmit-receive of an e-mail between said e-mail server and said host equipment in accordance with said mail protocol.

3. The communication control apparatus according to claim 2 wherein said memory means stores, as said mail protocol, at least one protocol out of a SMTP (Simple Mail Transfer Protocol), a POP (Post Office Protocol), and an IMAP (Internet Message Access Protocol), and
said control means controls the transmit-receive of an e-mail between said e-mail server and said host equipment in accordance with at least one mail protocol stored in said memory means.

4. The communication control apparatus according to claim 1 wherein said memory means stores, as a network application protocol, a HTTP (Hyper Text Transfer Protocol); and
said control means controls a WWW (World Wide Web) server in accordance with said HTTP to control the transmit-receive of data between said WWW server and said host equipment.

5. The communication control apparatus according to claim 1 wherein said memory means stores, as network setting information, information which is necessary when processing in accordance with said network application protocol is carried out; and
said control means controls the transmit-receive of data between said network server and said host equipment, using network setting information stored in said memory means.

6. The communication control apparatus according to claim 1 wherein said memory means stores, as network setting information, at least one information out of an e-mail ID with respect to an e-mail server, an e-mail password, an e-mail address, and an e-mail server address; and
said control means controls the transmit-receive of data between an e-mail server and said host equipment, using at least one said network setting information.

7. The communication control apparatus according to claim 1 wherein said memory means stores, as a network application protocol, HTTP, and stores, as network setting information, address information of a proxy server; and
said control means controls the transmit-receive of data between a server contained in WWW and said host equipment through said proxy server, using address information of the proxy server in accordance with HTTP stored in said memory means.

8. The communication control apparatus according to claim 1 wherein said memory means further stores individual information changed according to indication of a user; and
said control means sets a connection relationship with said communication network through said short-distance wireless communication network using individual information stored in said memory means.

9. The communication control apparatus according to claim 8 wherein said memory means stores, as individual information, at least one information out of individual ID list information indicative of mail address list information comprising address information at a transmission destination for transmitting an e-mail, transmit-receive mail hysteresis information indicative of hysteresis which transmitted and received an e-mail, typical sentence list information comprising a typical sentence when an e-mail is prepared, and information in which read e-mails are classified by individual ID; and
said control means controls the transmit-receive of an e-mail between an e-mail server and said host equipment using at least one information stored in said memory means.

10. The communication control apparatus according to claim 9 comprising said individual information control means for controlling contents of individual information stored in said memory means, wherein
said individual information control means classifies and prepares individual ID list information every said host equipment for handling e-mails to store them in said memory means; and
said control means controls the transmit-receive of an e-mail between an e-mail server and said host equipment using individual ID list information prepared by said individual information control means.

11. The communication control apparatus according to claim 8 wherein said memory means stores, as individual information, URL (Uniform Resource Locator) list information indicative of a list of URL; and
said control means controls the transmit-receive of an e-mail between a WWW server and said host equipment using URL list information stored in said individual information memory means.

12. The communication control apparatus according to claim 1 wherein said memory means further stores an individual authentication password for confirming utilizing authority; and
said control means compares a password supplied from said host equipment with an individual authentication password stored in said memory means to carry out authentication of the utilizing authority, and controls the transmit-receive of data between said network server and said host equipment.

13. The communication control apparatus according to claim 1 wherein said memory means further stores terminal ability information in connection with a function of said host equipment connected through said wired communication means ; and
said control means controls so as to carry out the transmit-receive of data between said network server and said host equipment on the basis of the terminal ability information stored in said memory means.

14. The communication control apparatus according to claim 13 wherein said control means performs processing for converting a data format on the basis of terminal ability information stored in said memory means to control the transmit-receive of data between said network server and said host equipment.

15. The communication control apparatus according to claim 13 wherein said control means decides the read or unread of an e-mail every host equipment on the basis of said terminal ability information stored in said memory means, and uses the result of decision to transmit an e-mail from said e-mail server to said host equipment through said communication control apparatus.

16. The communication control apparatus according to claim 1 wherein said control means carries out controlling for giving network setting information stored in said memory means to said host equipment through said wired communication means
in response to a request for obtaining network setting information from said host equipment.

17. The communication control apparatus according to claim 16 wherein said control means gives and receives a command packet comprising a command indicative of a control command between said host equipment and a parameter indicative of contents of the command, and a response packet comprising a parameter indicative of a processing result with respect to command and contents of the processing result to thereby carry out processing for obtaining said network setting information.

18. The communication control apparatus according to claim 17 wherein said control means carries out authentication processing for host equipment prior to said obtaining processing for the network setting information, and carries out obtaining processing for said network setting information on the basis of the result of the authentication processing.

19. Host equipment on which a communication control apparatus is mounted, the communication apparatus comprising: wired communication means for transmit-receiving data between mounted host equipment; short-distance wireless communication means for transmit-receiving data to and from an external communication network through a short-distance wireless communication network; memory means for storing therein network setting information which is information related to the communication network, and a network application protocol for controlling processing of a network server within the communication network; and control means for setting a connection relationship with respect to the communication network through the short-distance wireless communication network on the basis of network setting information stored in the memory means and for controlling the transmit-receive of data between the network server and the host equipment in accordance with the network application protocols stored in the memory means, wherein the control means carry out for giving the network setting information stored in the memory means to the host equipment through the wired communication means in response to request for obtaining the network setting information from the host equipment comprising:
setting processing means for issuing a request of obtaining the network setting information to the communication control apparatus, obtaining the network setting information from the communication control apparatus, and applying the obtained network setting information to the network protocols.

20. The host equipment according to claim 19 wherein said setting processing means comprises a network application software for setting said network setting information to a setting part of a network application software of the existing network protocol when said communication control apparatus is mounted.

21. The host equipment according to claim 20 wherein said setting processing means removes setting information set to the setting part of said network application software when said communication control apparatus is mounted from said setting part when said communication control apparatus is removed.

22. A communication method comprises: setting a connection relationship between a wireless communication control apparatus and a communication network through said short-distance wireless communication network using network setting information related to the communication network externally of a short-distance wireless communication network stored in the communication control apparatus mounted on host equipment; and
transmit-receiving data between said communication control apparatus and a network server within said communication network in accordance with network application protocols stored in said communication control apparatus and carrying out the transfer of wired data between said host equipment and said communication control apparatus, whereby and transmit-receiving data between said network server and said host equipment.

23. The communication method according to claim 22 wherein a mail protocol for transmit-receiving an e-mail between said network server and said host equipment is used as a network application protocol to transmit-receive an e-mail between an e-mail server and said host equipment through said communication control apparatus.

24. The communication method according to claim 23 wherein at least one protocol out of SMTP (Simple Mail Transfer Protocol), POP (Post Office Protocol), and IMAP (Internet Message Access Protocol ) is used as said mail protocol to transmit-receive an e-mail between said e-mail server and said host equipment through said communication control apparatus.

25. The communication method according to claim 22 wherein HTTP (Hyper Text Transfer Protocol) is used as a network application protocol to transmit-receive data between a WWW (World Wide Web) server and said host equipment through said communication control apparatus.

26. The communication method according to claim 22 wherein information which is necessary when processing in accordance with said network application protocol is carried out is used as network setting information to transmit-receive data between said network server and said host equipment through said communication control apparatus.

27. The communication method according to claim 22 wherein at least one information out of an e-mail ID, an e-mail password, an e-mail address, and an e-mail server address with respect to said e-mail server is used as network setting information
to transmit-receive an e-mail between said e-mail server and said host equipment through said communication control apparatus.

28. The communication method according to claim 22 wherein HTTP is used as a network application protocol, and address information of a proxy server is used as network setting information to transmit-receive data between the WWW server and said host equipment through said proxy server.

29. The communication method according to claim 22 wherein individual information changed according to indication of a user is stored in advance in said communication control apparatus, and
a connection relationship between said communication network and said communication control apparatus is set through said short-distance wireless communication network using said individual information.

30. The communication method according to claim 23 wherein at least one information out of message address list information comprising address information at a transmission destination for transmitting an e-mail, transmission mail hysteresis information indicative of hysteresis in which an e-mail is transmitted and received, typical sentence list information comprising a typical sentence when an e-mail is prepared, and individual ID list information indicative of information in which read e-mails are classified by the individual ID is used to transmit and receive an e-mail between sad e-mail server and said host equipment.

31. The communication method according to claim 30 wherein said individual ID information are classified and prepared every host equipment for handing an e-mail, and
transmission and reception of an e-mail are carried out between said e-mail server and said host equipment through said communication control apparatus using said individual ID list information.

32. The communication method according to claim 22 wherein transmission and reception of an e-mail are carried out between a WWW server and said host equipment through said communication control apparatus, using, as individual information, URL (Uniform Resource Locator) list information indicative of a list of URL.

33. The communication method according to claim 22 wherein an individual authentication password for confirming utilizing authority of said communication control apparatus is stored in advance in said communication control apparatus, and
a password produced by said host equipment is compared with an individual authentication password stored in advance to authenticate the utilizing authority of said communication control apparatus, and transmission and reception of data are carried out between said network server and said host equipment through said communication control apparatus on the basis of the authentication result.

34. The communication method according to claim 22 wherein terminal ability information in connection with a function of said host equipment is stored in advance in said communication control apparatus or said host equipment, and
transmission and reception of data are carried out between said network server and said host equipment through said communication control apparatus on the basis of said terminal ability information.

35. The communication method according to claim 28 wherein processing for converting a data type of data contained in an e-mail is carried out in said communication control apparatus on the basis of said terminal ability information, and
data subjected to the conversion processing is transmitted from said communication control apparatus to said e-mail server, or is output to said host equipment.

36. The communication method according to claim 28 wherein decision is made of read or unread of an e-mail on the basis of said terminal ability information, and
an e-mail is transmitted from said e-mail server to said host equipment through said communication control apparatus.

37. The communication method according to claim 22 wherein a request for obtaining network setting information is issued from the host equipment to the communication control apparatus, and
the network setting information obtained is applied to a network protocol provided by said host equipment.

38. The communication method according to claim 37 wherein a command packet comprising a command indicative of a control command and a parameter indicative of contents of a command, and a response packet comprising a processing result with respect to a command and a parameter indicative of contents of the processing result are transferred between the host equipment and the communication control apparatus to thereby carry out processing for obtaining said network setting information.

39. The communication method according to claim 38 wherein authentication processing is carried out between the host equipment and the communication control apparatus prior to said processing for obtaining network setting information, and said processing for obtaining network setting information is carried out on the basis of the authentication processing result.

40. A communication method wherein carrying out transmit-receiving of a packet, through a communication control apparatus for carrying out processing for connection with a communication network externally of a short-distance wireless communication network, between the communication network and host equipment,
wherein when the transfer of a packet is carried out between the communication control apparatus and the host equipment, the packet in the packet format used in common to other host equipment included in the short-distance wireless communication network is produced by the communication control apparatus and the host equipment to carry out the transmit-receiving of the packet.

41. The communication method according to claim 40 wherein a command packet comprising a command indicative of a control command and a parameter indicative of contents of a command, and a response command comprising a processing result with respect to a command and a parameter indicative of contents of the processing result comprise a packet format used in common to other host equipment.

42. The communication method according to claim 40 wherein a packet containing a password indicative of utilizing authority with respect to said communication control apparatus is produced to transmit it from said host equipment to said communication control apparatus,
a password stored in advance in said communication control apparatus is compared with a password transmitted from said host equipment to said communication control apparatus to authenticate the utilizing authority, and
the authentication result is transmitted from said communication control apparatus to said host equipment.

43. The communication method according to claim 40 wherein a packet including terminal function information in connection with a function of said host equipment is transmitted from said host equipment to said communication control apparatus, and
the terminal ability information contained in the packet is stored in said communication control apparatus.

44. The communication method according to claim 40 wherein a packet indicative of a start or a stop of connection of said communication control apparatus to a network server contained in a communication network through said short-distance wireless communication network is produced to transmit it from said host equipment to said communication control apparatus.

45. The communication method according to claim 40 wherein a packet indicative of a control of network setting information which is information in connection with said communication network stored in advance in said communication control apparatus is produced to transmit it from said host equipment to said communication control apparatus.

46. The communication method according to claim 40 wherein a packet indicative of a control of individual information changed according to indication of a user stored in advance in said communication control apparatus is produced to transmit it from said host equipment to said communication control apparatus.

47. The communication method according to claim 40 wherein a packet indicative of any of processing requests out of transmission of an e-mail to an e-mail server for controlling e-mails contained in said communication network, reception of an e-mail, and reception of mail list information is produced to transmit it from said host equipment to said communication control apparatus.

48. The communication method according to claim 47 wherein when an e-mail is transmitted from said host equipment to said e-mail server, data provided by RFC (Request For Comments) provided by IETF (Internet Engineering Task Force) are added to data input into said communication control apparatus from said host equipment.

49. A communication method wherein when data included in an e-mail is prepared by host equipment, and an e-mail is transmitted to an e- mail server included in a communication network externally of a short-distance wireless communication network through a communication apparatus and a short-distance wireless communication network mounted on said host equipment, comprising:
collectively or divisionally transmitting data defined in RFC (Request For Comments) from said host equipment to said communication control apparatus;
constructing data included in an e-mail within a memory region in said communication control apparatus using data transmitted from said host equipment to said communication control apparatus; and
transmitting data constructed in the memory region to the e-mail server in the external communication network through the short-distance wireless communication network.

50. The communication method according to claim 49 wherein data of a binary type is transmitted from said host equipment to said communication control apparatus, and
type conversion processing is carried out relative to the data of a binary type within a memory region in said communication control apparatus to construct data of MIME (Multipurpose Internet Mail Extensions).

51. The communication method according to claim 49 wherein data provided by RFC 822 or RFC 2045/2046 is constructed within a memory region in said communication control apparatus using data transmitted from said host equipment to said communication apparatus.
